# EUROPÄISCHE PATENTSCHRIFT

(11) **EP 3 813 213 B1**
(45) Veröffentlichungstag und Bekanntmachung des Hinweises auf die Patenterteilung: **05.11.2025**
(21) Anmeldenummer: 20203219.9
(22) Anmeldetag: 18.09.2015
(51) Int. Cl.: H02G 11/00, F16G 13/16

(54) **LEITUNGSFÜHRUNGSEINRICHTUNG, INSBESONDERE FÜR REINRAUMANWENDUNGEN, SOWIE STÜTZRIPPENMODUL UND BAUSATZ HIERFÜR**
CABLE GUIDE DEVICE, IN PARTICULAR FOR CLEAN ROOM APPLICATIONS, AND SUPPORTING FIN MODULE AND KIT THEREFOR
DISPOSITIF DE PASSAGE DE CÂBLES, EN PARTICULIER POUR LES APPLICATIONS EN SALLE BLANCHE, AINSI QUE MODULE DE NERVURES D'APPUI ET KIT CORRESPONDANT ASSOCIÉ

(30) Priorität: 18.09.2014 DE 202014104458 U; 02.04.2015 DE 202015101688 U
(43) Veröffentlichungstag der Anmeldung: 28.04.2021
(62) Teilanmeldung aus: 15763941.0
(73) Patentinhaber: Igus GmbH, 51147 Köln (DE)
(72) Erfinder: BARTEN, Dominik, 53340 Meckenheim (DE); HERMEY, Andreas, 53773 Hennef (DE); JAEKER, Thilo-Alexander, 53757 Sankt Augustin (DE)
(74) Vertreter: Lippert Stachow Patentanwälte Rechtsanwälte

(56) Entgegenhaltungen:
- EP-A1- 1 291 996
- EP-A2- 1 152 510
- WO-A1-2005/071284
- DE-A1- 102013 105 427
- DE-U1- 202013 101 203

## Beschreibung

Die Erfindung betrifft eine Leitungsführungseinrichtung für Leitungen wie beispielsweise Kabel, Schläuche oder dergleichen, welche ein erstes Ende zum Befestigen an einer feststehenden Anschlussstelle und ein zweites Ende zum Befestigen an einer dazu relativ beweglichen weiteren Anschlussstelle aufweist. Zwischen ihren Enden bildet die Leitungsführungseinrichtung ein Obertrum, einen verfahrbaren Umlenkbogen und ein Untertrum. Der Umlenkbogen ist um eine Umlenkachse gekrümmt bzw. verschwenkt, vorzugsweise mit vorgegebenem Krümmungsradius, und typischerweise in der Ebene senkrecht zur Umlenkachse verfahrbar.

Das Patent US 5,069,486 A bzw. EP 0 197 546 B1 beschreibt eine Energieführungskette für dreidimensionale Bewegungen, z.B. an einem Roboter. Hierbei können einzelne Glieder aus Schalenteilen zusammengesetzt werden. Sie greifen unter Bildung einer Kugelgelenkverbindung ineinander. In den Gelenken können besondere Dichtungen vorliegen, welche die geführten Leitungen z.B. vor Feuchtigkeit schützen. Eine solche Kette vermeidet jedoch nicht das Freisetzen von Abriebpartikeln, die durch aneinanderreiben der benachbarten Glieder entstehen.

Im Betrieb einer Leitungsführungseinrichtung entsteht mit der Zeit meist unvermeidbar Abrieb, d.h. es entstehen kleine Partikel bedingt durch Reibung zwischen den Leitungen und/oder den Bestandteilen der Leitungsführungseinrichtung.

Die Erfindung betrifft insbesondere eine Leitungsführungseinrichtung für solche Anwendungen, in welchen Abrieb nicht freigesetzt werden soll. Dies ist beispielsweise in einer Reinraumanwendung der Fall.

Das Patent US 6,773,297 B1 bzw. EP 1 319 865 B1 beschreibt Zusatz- bzw. Zwischenrahmen, welche einzeln um die Gelenkverbindungen einer herkömmlichen Energieführungskette angebracht werden und gegen Austritt von Abrieb wirken. Auch dies ist aufwendig in Herstellung und späterer Handhabung. Anders als die Lösung aus US 2012 205 498 A1 kann dieser Ansatz die Entstehung von Abrieb nicht verringern.

Aus dem Gebrauchsmuster DE 20 2013 101 203 U1 ist eine gattungsgemäße Leitungsführungseinrichtung vorbekannt, welche eine biegsame Umhüllung (Engl. sheath) in der Art eines Wellschlauchs aufweist. Diese wellschlauchartige (Engl. corrugated) Umhüllung (Engl. envelope) umgibt den Innenraum der Leitungsführungseinrichtung staubdicht, sowohl in Längsrichtung zwischen den beiden Enden, als auch in der Umfangsrichtung. Durch die staubdichte Umhüllung wird auf einfache aber effektive Weise das unerwünschte Austreten von Abriebpartikeln verhindert.

Ein wesentlicher Vorteil der Lösung gemäß DE202013101203U1 liegt darin, dass die Umhüllung an sich bekannte Energieführungsketten als Leitungsführung nachrüsten kann, d.h. es sind insofern keine aufwendigen Sonderkonstruktionen zum Schutz der Leitungen nötig.

In diesem Zusammenhang ist es auch bereits bekannt, sogenannte Kabelschutzschläuche als gattungsgemäße Leitungsführungseinrichtung einzusetzen. Diese kommen in der Regel dann zum Einsatz, wenn die mechanische Beanspruchung der Leitungsführungseinrichtung relativ gering ausfällt. So beschreibt beispielsweise die Offenlegungsschrift DE 10 2012 000 798 A1 einen solchen Kabelschutzschlauch mit etwa rechteckigem Querschnitt, wobei eine zusätzliche Vorrichtung zur Aufteilung des Innenraums in mehrere Schlauchbereiche für die verschiedenen Leitungen vorgesehen ist. Diese Vorrichtung weist einen langgestreckten, biegsamen Träger sowie davon radial abstehende Trennrippen auf. In einem Ausführungsbeispiel ist vorgesehen, dass Eingriffselemente an den Trennrippen von innen in Wellentäler des Schutzschlauchs eingreifen und dadurch ein Abknicken verhindern. Nachteilig bei der Lösung aus DE102012000798A1 ist zunächst der für die Herstellung erforderliche Aufwand. Andererseits können mit dieser Lösung große freitragende Längen, z.B. des Obertrums, allenfalls mit zusätzlichen Hilfsmitteln realisiert werden.

Eine andere staubdichte Leitungsführungseinrichtung ist bereits aus der internationalen Patentanmeldung WO 2005/071284 A1 bzw. dem Patent US 7,784,259 B2 vorbekannt. Hierbei handelt es sich um einen monolithischen, im Extrusionsverfahren hergestellten, schlauchartigen Mantel. Eine Seite ist hierbei in Umfangsrichtung flexibler gestaltet, als die andere Seite. So kann die eine Seite in Umfangsrichtung über die andere Seite gebogen werden zum Schließen des Mantels. Diese Bauweise erlaubt ebenfalls nur relativ geringe freitragende Längen.

Ein diesbezüglich weiterführender Ansatz ist aus der Offenlegungsschrift DE 10 2012 100 290 A1 bzw. der U.S. Patentanmeldung US 2012 205 498 A1 bekannt. Diese offenbart eine gelenkige Schutz- und Führungsvorrichtung für Kabel und dergleichen, welche ebenfalls das Freisetzen von durch Abrieb entstandenem Feinstaub vermeiden soll. Hierzu wird ebenfalls ein flexibles, schlauchartiges Umhüllungselement vorgesehen, jedoch mit einer Vielzahl von rohrförmigen einzelnen Aufnahmekanälen, um die Leitungen getrennt voneinander zu führen. Zu beiden Seiten der schlauchartigen Umhüllung ist jeweils eine aus Gliedern gelenkig zusammengesetzte Stützkette vorgesehen, welche den Krümmungsradius des Umlenkbogens begrenzt und andererseits ein Durchbiegen im freitragenden Obertrum verhindert. Diese Lösung verbindet, wie die Leitungsführungseinrichtung aus DE202013101203U1, die Vorteile herkömmlicher Energieführungsketten hinsichtlich mechanischer Belastung und freitragender Längen mit einem auch für kritische Anwendungen geeigneten Schutz gegen Austreten von Abriebpartikeln. Die Lösung gemäß DE102012100290A1 ist jedoch aufwendiger in der Herstellung, da für die Stützketten eine Sonderanfertigung aus speziellen Kunststoffgliedern eingesetzt wird. Ein weiterer Nachteil der Lösung gemäß DE102012100290A1 liegt darin, dass eine Reparatur einer einzelnen Leitung oder einer Stützkette nur nach vollständigem Abbau der Leitungsführungseinrichtung möglich ist. Man kann das einteilig extrudierte Band- bzw. Umhüllungselement nach DE102012100290A1 nicht abschnittsweise öffnen.

Die eingangs genannte Leitungsführungseinrichtung aus DE202013101203U1 bildet demnach den Ausgangspunkt der vorliegenden Erfindungen.

Eine erste Aufgabe der Erfindung ist es mithin, eine Leitungsführungseinrichtung vorzuschlagen, welche einen guten Schutz gegen unerwünschtes Austreten von abriebbedingten Partikeln bietet und sich im Vergleich zum Stand der Technik mit weniger Aufwand herstellen lässt.

Diese Aufgabe wird bei einer gattungsgemäßen Leitungsführungseinrichtung gemäß Anspruch 1 bereits dadurch gelöst, dass die Umhüllung eine Art Wellschlauchs umfasst und ein Wellprofil (Engl. corrugated profile) aufweist, welches die Biegsamkeit zumindest unterstützt, und dass die staubdichte Umhüllung ein asymmetrisches Biegeverhalten in Bezug auf die gewünschte Krümmung um die Umlenkachse und auf die grundsätzlich unerwünschte, entgegengesetzte Krümmung aufweist. Die Asymmetrie ist derart, dass die zugelassene Durchbiegung eines freitragenden Bereichs im Vergleich zur gewünschten Krümmung, d.h. der Krümmung im Umlenkbogen, erheblich geringer ist.

Die gewünschte Krümmung um die Umlenkachse bzw. Krümmung nach innen wird zur Vereinfachung vorliegend als "konkave" Krümmung, die unerwünschte, entgegengesetzte Krümmung bzw. Krümmung nach außen als "konvexe" Krümmung bezeichnet.

Die wellschlauchartige Gestalt der Umhüllung kann grundsätzlich beliebiger Art sein, sofern diese die nötige Flexibilität gewährleistet. Typischerweise weist die Umhüllung hierzu Wellenberge und Wellentäler bzw. Ein- und Ausbuchtungen auf, d.h. ein gewelltes Profil (Engl. corrugated profile), im Längsschnitt betrachtet. Eine Vielzahl verschiedener Profile sind hierbei möglich, beispielsweise ein kurviges Profil, z.B. ein näherungsweise sinuswellenförmiges Profil, ein kantiges Profil, z.B. ein Rechteckprofil, eine Mischform mit gerundeten Kanten, usw. Auch der Querschnitt der Umhüllung ist nicht entscheidend, so kommen kreisrunde, langlochförmige oder etwa rechteckige Querschnitte usw. in Betracht.

Für die nachfolgenden Aspekte der Erfindung ausschlaggebender ist hingegen, dass das Biegeverhalten zumindest in der Ebene, in welcher Obertrum, Untertrum und Umlenkbogen verlaufen, d.h. die Ebene, in welcher der Umlenkbogen verfahrbar ist, ein asymmetrisches Biegeverhalten, insbesondere eine je nach Biegerichtung unterschiedlich starke Biegsamkeit, aufweist. Mit anderen Worten, im betrachteten Abschnitt ist die Biegsamkeit bei gleich starkem Biegemoment in vorbestimmter Weise vom Drehsinn des Biegemoments abhängig.

Auf diese Weise wird erreicht, dass die Umhüllung selbst, d.h. auch ohne Verwendung einer herkömmlichen Energieführungskette oder besonderen Stützkette, im freitragenden Bereich eine hinreichende Stützfunktion gewährleistet. Zudem wird erreicht, dass die Umhüllung selbst die Leitungen führen und tragen kann. Demnach kann eine Stützkette oder typische Energieführungskette komplett entfallen. Anders ausgedrückt, im Vergleich zur DE202013101203U1 übernimmt bei einer erfindungsgemäßen Leitungsführungseinrichtung die zunächst zur Abdichtung gegen Staub vorgesehene Umhüllung zugleich wesentliche Funktionen herkömmlicher Energieführungsketten. Die Umhüllung für sich genommen kann zur Begrenzung des Krümmungsradius im Umlenkbogen einerseits, aber auch hinsichtlich der Vermeidung übermäßiger Durchbiegung im Obertrum und/oder im Untertrum ausgebildet sein. Mit anderen Worten, die Umhüllung selbst kann ggf. mit Anbauteilen für beide Fälle einen unterschiedlichen Minimalradius der Krümmung bzw. Biegung gewährleisten.

Die Umhüllung ist demnach für sich genommen bevorzugt nicht nur selbsttragend, sondern auch als Träger für die Leitungen ausgeführt. Leitungen können demnach unmittelbar in der Umhüllung geführt sein, ohne zusätzliche Vorrichtung zur Aufnahme der Leitungen. Alle Wirkungs- und Gestaltungsangaben betreffend die Umhüllung, insbesondere Form- und Maßangaben beziehen sich vorliegend, soweit nichts anderes ersichtlich ist, auf den Ruhezustand bzw. den belastungsfreien Zustand der Umhüllung. Die Durchbiegung bezieht sich vorliegend, sofern nicht anders angegeben, auf die Biegung in Strecklage mit einer nominellen Leitungsladung, aber ohne sonstige Last bzw. ohne Überlast. Staubdicht bedeutet im vorliegenden Zusammenhang nicht zwingend hermetisch gasdicht bzw. so verschlossen, dass nichts eindringen oder austreten kann. Staubdicht bedeutet vielmehr technisch dicht gegen ein Austreten von Abriebpartikeln typischer Korngrößen, die bei herkömmlichen Energieführungsketten durch Reibung der Kettenglieder oder der Leitungen aneinander entstehen.

Die Anwendung der Erfindung ist jedoch nicht auf Reinraumanwendungen beschränkt. Aufgrund der inhärenten Biegsamkeit können Gelenkverbindungen mit Reibung vermieden werden. Die Umhüllung ist aufgrund der asymmetrischen Biegsamkeit und der einhergehenden geringeren Durchbiegung zumindest für kurze freitragende Längen geeignet.

Asymmetrisches Biegeverhalten liegt im Sinne der Erfindung zumindest über einen Längsabschnitt der Leitungsführungseinrichtung vor. Die Biegsamkeit kann ggf. auch abschnittsweise unterschiedlich asymmetrisch und/oder symmetrisch sein. Insbesondere liegt auch eine über die Länge variierende Biegsamkeit im Rahmen der Erfindung. Analog wird in den einzelnen Abschnitten jeweils ein im Wesentlichen in einer Ebene liegender Verlauf realisiert, wobei sich Ebenen auch abschnittsweise unterscheiden können, und z.B. senkrecht zueinander liegen können. In bevorzugter Ausführung gestattet die wellschlauchartige Umhüllung auch bei vollständiger Befüllung mit Leitungen - im Vergleich zur gewünschten konkaven Krümmung - nur eine sehr geringe oder im Wesentlichen keine konvexe Krümmung, d.h. nur sehr geringe oder im Wesentlichen keine Durchbiegung. So kann ein optimaler, etwa geradliniger Verlauf des Obertrums gewährleistet werden. Im unbelasteten Zustand kann die Umhüllung zu diesem Zweck eine leichte konkave Vorkrümmung bzw. Vorspannung aufweisen.

Die beiden nachfolgenden Aspekte beruhen jeweils auf dem vorstehend erläuterten der ersten Gruppe gemeinsamen Erfindungskonzept.

### A) 1) Nicht beanspruchter ASPEKT ("e-skin"):

Gemäß einem ersten, nicht beanspruchten Aspekt wird in einer besonders einfachen Ausführungsform das asymmetrische Biegeverhalten zumindest überwiegend oder ausschließlich dadurch erzielt, dass die wellschlauchartige Umhüllung an der Außenseite ihres Umfangs ein anderes gewelltes Profil aufweist als an der Innenseite ihres Umfangs. Durch verschiedenartige Profilgestaltung an den beiden Seiten kann das gewünschte Krümmungsverhalten der Umhüllung an sich vordefiniert bzw. vorgegeben werden. Demnach sind hierfür keine zusätzlichen Bauteile, wie bspw. Stütz- oder Führungsketten, erforderlich. Die verschiedenartigen Profile an den beiden Seiten der Umhüllung können neben der richtungsabhängigen Biegsamkeit insbesondere auch eine Verschwenk- bzw. Krümmungsebene der Umhüllung vorgeben. Zudem kann die Profilgestaltung, insbesondere an der Außenseite, so gewählt sein, dass eines der beiden gewellten Profile höhere Schub- und Druckfestigkeit aufweist als das andere Profil. Die verschiedenen Profile können aus dem gleichen oder aus unterschiedlichem Material hergestellt sein.

In einem nicht beanspruchten Beispiel mit unterschiedlichen Profilen, welche u.a. nur geringe oder keine Stauchung in Längsrichtung an der Außenseite zulässt, hat die wellschlauchartige Umhüllung an der Außenseite ein Profil mit Wellentälern, deren lichte axiale Breite weniger als 20%, insbesondere weniger als 10%, der axialen Breite der Wellenberge beträgt. So steht nur sehr wenig Freiraum für ein Stauchen an der Außenseite zur Verfügung. Ein Stauchen der Wellenberge selbst kann wiederum durch deren Gestaltung reduziert oder verhindert werden.

In einem nicht beanspruchten Beispiel hat das gewellte Profil der Außenseite bzw. radial außen eine Omega-Form im Längsschnitt. Hierbei weisen Wellenberge zu den Enden hin ausgebauchte Flanken auf. Das Profil ist so gestaltet, dass diese Flanken in Strecklage der Umhüllung, insbesondere im freitragenden Obertrum, beidseitig miteinander im Anschlag stehen.

In einem nicht beanspruchten Beispiel mit verschiedenartiger Profilierung an der Innen- und Außenseite hat die wellschlauchartige Umhüllung an ihrer Innenseite ein Wellprofil mit Wellentälern, deren lichte axiale Breite mindestens 50% der axialen Breite der Wellenberge beträgt, und insbesondere in etwa gleich groß ist. So kann an der Innenseite insbesondere ein an sich bekanntes, erprobtes Profil vorgesehen werden.

Verschiedenartige Profile an den beiden Seiten der Umhüllung können insbesondere in Kunststoff, durch geeignete Verfahren der Kunststoff-Technik, auch bei abschnittsweisen oder über die gesamte Länge einstückigen Umhüllungen realisiert werden. Einstückige Umhüllungen sind von sich aus staubdicht.

Eine im Krümmungsradius leichter variable und einfache Herstellung der wellschlauchartigen Umhüllung wird ermöglicht, wenn diese abschnittsweise in modularer Bauweise, jeweils aus zwei Schalenteilen mit unterschiedlichen Profilen zusammengesetzt ist. So können z.B. innenseitige Schalenteile mit verschiedenen, vorgegebenen Krümmungsradien, mit einem außenseitigen Schalenteil, welches Durchbiegung vermeidet, kombiniert werden. Die Schnittstelle, an welcher beide Schalenteile verbunden sind, liegt hierbei vorzugsweise auf Höhe der neutralen Faser der Leitungsführungseinrichtung, wo durch minimale Relativbewegung eine staubdichte Verbindung der Teile vereinfacht wird.

Separat hergestellte Schalenteile können auch ohne besonderen Aufwand aus verschiedenem Material gefertigt werden.

Ein Aufbau der Umhüllung mit Abschnitten aus zwei Schalenteilen ermöglicht ferner, dass mindestens ein Schalenteil, vorzugsweise das außenseitige Schalenteil, einen oder mehrere angeformte Trennstege aufweist, welche den Innenraum im Querschnitt aufteilen. Durch die Aufteilung in einen jeweiligen Kanalbereich für jede Leitung wird Abrieb durch Reibung zwischen den Leitungen minimiert oder vermieden.

Die Leitungsführungseinrichtung gemäß dem ersten, nicht beanspruchten Aspekt ist besonders leicht, hat einen geräusch- und vibrationsarmen Lauf, ist wartungsarm und lässt sich relativ preiswert herstellen. Entsprechend kann sie in einer Vielzahl Anwendungen eingesetzt werden.

Der erste, nicht beanspruchte Aspekt betrifft schließlich auch das Schalenteil zur Herstellung einer Leitungsführungseinrichtung gemäß einer der o.g. Ausführungsformen. Das Schalenteil hierzu kann einstückig aus flexiblem Kunststoff hergestellt sein und im Längsschnitt ein Wellprofil aufweisen mit asymmetrischem Biegeverhalten in Bezug auf eine Krümmung um eine Umlenkachse und auf eine entgegengesetzte Biegung. Das Wellprofil ist im Sinne der Erfindung derart gewählt, dass die zugelassene Biegung im Vergleich zur gewünschten Krümmung erheblich geringer ist. Dies kann insbesondere ein Wellprofil in Omega-Form bewirken, mit Wellenbergen, die zu den Enden hin ausgebauchte Flanken aufweisen, und wobei das Wellprofil so gestaltet ist, dass diese Flanken in Strecklage, d.h. in einem freitragenden Bereich, beidseitig miteinander im Anschlag stehen.

### A) 2) Beanspruchter ASPEKT ("e-rib"):

Erfindungsgemäß wird zur Bestimmung des Krümmungsverhaltens bzw. zur Erzielung oder Verstärkung asymmetrischer Flexibilität ein von außen angebrachtes, separates Stützgerippe (Engl. "supporting skeleton") mit in Umfangsrichtung verlaufenden Querrippen vorgesehen. Mit diesem Ansatz kann die Umhüllung insbesondere einen herkömmlichen Wellschlauch mit an sich symmetrischem bzw. richtungsunabhängigem Biegeverhalten umfassen. Zusammen mit dem Stützgerippe als Anbauteil bildet der Wellschlauch mit herkömmlicher Profilierung dann die erfindungsgemäße Umhüllung.

Erfindungsgemäß hat die Umhüllung ein von außen angebrachtes, separates Stützgerippe mit in Umfangsrichtung verlaufenden Querrippen. In einer ersten Ausführungsform können die Querrippen an einer Außenseite in Längsrichtung vorstehende Vorsprünge als Anschläge gegen Durchbiegung umfassen. Die Vorsprünge sind dabei derart ausgeführt, dass die Querrippen aufgrund der Vorsprünge in einer gestreckten bzw. freitragenden Lage der Umhüllung miteinander im Anschlag stehen. Vorzugsweise sind, insbesondere an jeder Querrippe, jeweils beidseitig zwei zueinander konjugiert geformte Vorsprünge vorgesehen. Die Vorsprünge benachbarter Querrippen können dabei zusammenwirken, insbesondere zentrierend zusammenwirken, um die Länge und auch die Seitenstabilität des freitragenden Teils, insbesondere des Obertrums, zu erhöhen. Diese Lösung hat den Vorteil, dass sie mit herkömmlichem Wellschlauch verschiedener Durchmesser innerhalb eines Nominalbereichs kompatibel ist. In einer Weiterbildung kann vorgesehen sein, dass das Stützgerippe beidseitig in Umfangsrichtung vorstehende, biegsame Haltearme aufweist. Diese erlauben es, das Stützgerippe außenseitig an der Umhüllung, ähnlich wie bei Klammern bzw. offenen Klemmschellen zu halten.

In einer zweiten Ausführungsform können die die Querrippen von außen bzw. an der Außenseite in das Wellprofil (Engl. corrugated profile) der wellschlauchartigen Umhüllung eingreifen. So bilden die z.B. über den halben Umfang eingreifenden Querrippen zusammen mit den Wellenbergen gemeinsam eine Versteifung gegen Durchbiegen, da die Wellentäler belegt sind.

Durch die Querrippen des separaten Stützgerippes in der zweiten Ausführungsform kann insbesondere auf einfache Weise die lichte Axialbreite bzw. der Freiraum zwischen Wellenbergen und/oder Wellentälern an der Außenseite, bezogen auf den Umlenkbogen, gegenüber dem entsprechenden Freiraum zwischen Wellenbergen und/oder Wellentälern an der Innenseite reduziert werden. Ferner kann auch die Krümmungsebene und/oder der Krümmungsradius durch die Gestaltung des Stützgerippes vorgegeben werden.

Vorzugsweise ist das Stützgerippe in der zweiten Ausführungsform so ausgeführt, dass in mindestens jede dritte Welle des Wellprofils, vorzugsweise in jede Welle des Wellprofils, eine entsprechende Querrippe eingreift. Auf diese Weise wird die axiale Stauchbarkeit der Außenseite erheblich reduziert.

Erfindungsgemäß weist das Stützgerippe zwei gegenüberliegende und in Längsrichtung verlaufende Träger auf, welche die Querrippen tragen, wobei die Träger vorzugsweise auf Höhe der neutralen Faser der Leitungsführungseinrichtung liegen bzw. diese vorgeben, etwa bei einem herkömmlichem Wellschlauch als Umhüllung. Das Stützgerippe ist vorzugsweise einstückig hergestellt, insbesondere als Spritzgussteil aus Kunststoff. Entsprechende Träger können an beiden Enden mit den Anschlussstellen befestigt werden, um Zug- und Druckkräfte beim Verfahren des Umlenkbogens abzufangen und so die eigentliche Umhüllung zu entlasten. Demnach ist es vorteilhaft, wenn das Stützgerippe eine Längserstreckung aufweist, welche mindestens der Maximallänge des Obertrums entspricht, vorzugsweise der Gesamtlänge der Leitungsführungseinrichtung. Durch das Stützgerippe, insbesondere die Träger, kann eine Seitenstabilität gegen Biegung aus der Krümmungsebene erzielt werden.

Zur Anpassung der Aufnahmekapazität ist es vorteilhaft, wenn die Träger seitliche Befestigungsmittel aufweisen zur Verbindung mit dem Stützgerippe einer weiteren Umhüllung. So können mehrere Umhüllungen parallel aneinander befestigt werden, um eine Leitungsführungseinrichtung mit größerem Aufnahmeraum zu bilden.

Ferner können an den Trägern endseitige Befestigungsmittel vorgesehen werden zur Befestigung in Längsrichtung aufeinanderfolgender Stützgerippe und ggf. zur Übertragung von Zug- und Schubkräften.

Als Knickschutz, insbesondere für einen herkömmlichen Wellschlauch, ist es vorteilhaft, wenn das Stützgerippe, z.B. in Verlängerung der Querrippen quer zu den Trägern, beidseitig etwa keilförmige oder V-förmige, relativ kurze Fortsätze, Laschen oder Zungen aufweist, welche über ein geringes Umfangsmaß in das Wellprofil der Innenseite eingreifen, um durch den eingeschlossenen Winkel der Keil- bzw. V-Form einen minimalen Krümmungsradius des Umlenkbogens vorzugeben.

Zur Umsetzung der Erfindung ist es vorteilhaft, wenn eine geringere Stauchbarkeit, insbesondere in der Axial- bzw. Längsrichtung, im Querschnitt über einen Anteil des äußeren Umfangsbereichs realisiert ist, welcher mindestens 12,5%, vorzugsweise zwischen 25% und 50% des vollen Umfangsmaßes der Umhüllung beträgt. Ein geeignetes Profil bzw. Stützgerippe sollte demnach an der Außenseite über ein gewisses Winkel- oder Umfangsmaß des Querschnitts wirksam die Stauchbarkeit reduzieren.

Insbesondere bei Verwendung eines Stützgerippes ist es für die Bestimmung des Krümmungsverhaltens vorteilhaft, wenn das Wellprofil der Umhüllung parallel ringförmig gewellt, d.h. nicht wendelförmig bzw. schraubenförmig gewellt ist. Zweckmäßig werden die Umhüllung und gegebenenfalls auch das Stützgerippe aus einem biegsamen Kunststoff hergestellt, insbesondere aus einem elastischen und dauerbiegefesten Kunststoff, vorzugsweise einem Thermoplast.

Die Erfindung ermöglicht es insbesondere, die statische konvexe Durchbiegung auf einen Radius zu begrenzen, welcher um ein Vielfaches, insbesondere um mindestens das 10-fache größer ist, als der statische Biegeradius der wellschlauchartigen Umhüllung bei konkaver Krümmung. Unter statischem Biegeradius wird hierbei der minimale Radius im Ruhezustand (ohne Verfahrbewegung) verstanden, bei welchem die Grenze plastischer Deformation erreicht wird.

Als erfindungsrelevant wird auch ein Modul zum modularen Aufbau eines Stützgerippes bzw. ein Stützgerippen-Modul beansprucht. Es dient zusammen mit einer Umhüllung umfassend einen Wellschlauch mit Wellprofil zum Herstellen einer Leitungsführungseinrichtung für Leitungen, insbesondere nach der ersten und zweiten Ausführungsform. Erfindungsgemäß ist ein Stützgerippen-Modul einstückig aus flexiblem Kunststoff hergestellt, hat eine Längserstreckung und ist so gestaltet, dass es von außen an einem Wellschlauch angebracht werden kann. Es hat ferner eine Vielzahl in eine Umfangsrichtung, d.h. quer zur Längserstreckung verlaufende Querrippen. Je nach Ausführungsform hat es Querrippen, die zumindest teilweise in das Wellprofil des Wellschlauchs eingreifen können oder Querrippen, die in Längsrichtung vorstehende Vorsprünge umfassen derart, dass die Querrippen in einer gestreckten bzw. freitragenden Lage miteinander im Anschlag stehen, im Sinne der entsprechenden Beschreibung weiter oben. Das Modul kann ferner alle oder einige der vorgenannten weiteren Merkmale des Stützgerippes aufweisen, insbesondere seitliche und/oder endseitige Befestigungsmittel zur Erweiterung bzw. modularen Verlängerung, Haltearme usw. Erfindungsgemäß weist das Modul Träger.

Die Verwendung eines Stützgerippes ist insbesondere für kleine Radien im Umlenkbereich vorteilhaft, da hier ein besonders weichelastisches Material der Umhüllung wünschenswert ist. Letzteres steht einer geringen Durchbiegung im freitragenden Bereich entgegen. Je nach Anwendung kann ein Stützgerippe auch mit einer Profilgestaltung nach dem ersten Aspekt kombiniert werden.

### A) 3) Nicht beanspruchter ASPEKT ("e-skin zipper"):

Ein weiterer, nicht beanspruchter Aspekt zur ersten Erfindungsgruppe betrifft die Festigkeit und Dichtwirkung gegen Staubpartikel der Verbindung zum Zusammenbau der einzelnen Schalenteile, wobei insbesondere eine Verbesserung gegenüber der Lehre aus DE 20 2014 104458 U1 erzielt werden kann.

Es wird hierzu ein wellschlauchartiges Schalenteil für eine Leitungsführungseinrichtung vorgeschlagen, welche durch eine wellschlauchartige Umhüllung gebildet ist, die jeweils abschnittsweise aus zwei Schalenteilen, insbesondere aus zwei Schalenteilen mit unterschiedlichen Profilen, zusammengesetzt ist.

Grundsätzlich können die Schalenteile an der Schnittstelle in Längsrichtung auf verschiedene Arten verbunden werden, z.B. nach der Herstellung unlösbar durch Klebe- oder Schweißtechnik, insbesondere eine für Kunststoffe geeignete Verbindungstechnik wie z.B. Ultraschallschweißung. Eine zerstörungsfrei lösbare und dennoch hinreichend feste Verbindung wird jedoch bevorzugt, insbesondere um ein nachträgliches Öffnen der Umhüllung zu ermöglichen.

Gemäß dem dritten, nicht beanspruchten Aspekt wird daher vorgeschlagen, dass das Schalenteil an beiden Längsseiten ein in Längsrichtung verlaufendes, insbesondere durchgehendes Befestigungsband hat, welches eine Verzahnung aufweist, vorzugsweise mit regelmäßig angeordneten Krampen (Engl. teeth) bzw. Zähnen, die mit einer entsprechenden Verzahnung an einem gegenüberliegenden Schalenteil in der Art eines Reißverschlusses (Engl. zip fastener) zusammenwirken. So wird eine gute, im Betrieb fest verschlossene Verbindung der gegenüberliegenden Schalenteile sichergestellt.

Wie bereits beim ersten Aspekt, kann u.a. durch die Befestigungsbänder, aber auch einen länglichen Querschnitt und eine quersteife Gestaltung der Schalenteile eine gute Seitenstabilität erzielt werden.

Die Krampen der ähnlich einem Reiß- bzw. Zippverschluss wirkenden Verbinder können insbesondere einen Wirkungsquerschnitt haben, der zumindest annähernd der Form eines gleichschenkligen Trapezes entspricht. Der wirksame Querschnitt kann z.B. der eines gleichschenkligen Trapezes mit Abrundungen in den Eckbereichen sein. Dabei kann vorgesehen sein, dass eine schmale Seite eines trapezförmigen Krampen von dem zu verbindenden Schalenteil abgewandt ist und zulaufende Schenkel der trapezförmigen Krampen von jeweils zwei verbundenen Teilen miteinander verkeilen.

Die keil- bzw. trapezförmige Gestaltung erlaubt insbesondere ein Befestigen bzw. Öffnen der gegenüberliegenden Schalenteile in etwa senkrecht zur Längsrichtung. Die Krampen können insbesondere Vorsprünge in Verlängerung des Bandes seitlich nach außen bilden, besonders in Richtung senkrecht zur Längsrichtung des Schalenteils bzw. der Leitungsführungseinrichtung. Die Krampen können jeweils auch geringfügig in Richtung zum anderen Schalenteil hin vom Befestigungsband vorstehen.

Gemäß einem weiteren, nicht beanspruchten unabhängigen Aspekt der Erfindung wird vorgeschlagen, dass ein Schalenteil eine Längsnut hat, welche mit einer entsprechenden Feder am zu verbindenden anderen Schalenteil formschlüssig zusammenwirkt. Entsprechend hat das andere Schalenteil, vorzugsweise im Bereich zwischen der Verzahnung und dem Übergang zur wellschlauchartigen Hülle, eine Feder, welche mit einer entsprechenden Längsnut am zu verbindenden Schalenteil formschlüssig zusammenwirkt. So kann die Abdichtung und auch die Befestigung der Schalenteile aneinander weiter verbessert werden.

Es kann vorgesehen werden, dass an einem stirnseitigen Endbereich ein senkrecht zur Längsachse gerichteter und umfänglich durchgehender Dichtvorsprung und am anderen stirnseitigen Endbereich eine innenliegende, entsprechend verlaufende Dichtnut vorgesehen ist, in welche der Dichtvorsprung des in Längsrichtung benachbarten form- und/oder kraftschlüssig eingreifen kann. So kann auch an den Stirnenden eine dichtende und feste Verbindung erzielt werden. Dies kann auch bei Schalenteilen nach dem ersten und ggf. zweiten Aspekt vorgesehen werden.

Hierbei kann der Dichtvorsprung mit einem zunächst zulaufenden und endseitig verdickten Querschnitt, der vorzugsweise einem Pilzkopf oder einem Spielstein ähnelt, ausgeführt sein.

Bei allen Umhüllungen aus Schalenteilen ist es vorteilhaft, wenn die Fügestelle zwischen den Befestigungsbändern die neutrale Faser der Leitungsführungseinrichtung bildet. Dadurch, dass die bei Krümmung eine konstante Abmessung in Längsrichtung erhaltende Schicht (=neutrale Faser) genau an der Schnittstelle liegt, wird u.a. eine feste Befestigung der Schalenteile aneinander ermöglicht, da ein Aufklaffen bei Biegung verhindert wird.

### B) ZWEITE, nicht beanspruchte GRUPPE VON ERFINDUNGEN ("T-Träger"):

Das zweite, nicht beanspruchte Konzept betrifft eine Leitungsführungseinrichtung für Leitungen, wie z.B. Kabel, Schläuche oder dergleichen, insbesondere für eine Reinraumanwendung, wobei die Leitungsführungseinrichtung ein erstes Ende zum Befestigen an einer feststehenden Anschlussstelle und ein zweites Ende zum Befestigen an einer relativbeweglichen Anschlussstelle aufweist. Zwischen den Enden bildet sie ein Obertrum, einen verfahrbaren Umlenkbogen und ein Untertrum, wobei der Umlenkbogen um eine Umlenkachse, vorzugsweise mit vorgegebenem Krümmungsradius, gekrümmt ist. Die Leitungsführungseinrichtung weist eine biegsame Umhüllung auf, welche einen Innenraum staubdicht umgibt, insbesondere sowohl in Längsrichtung zwischen den beiden Enden, als auch in der Umfangsrichtung.

Dabei wird die Umhüllung von einer Leitungsführung aus miteinander verbundenen Gliedern getragen, die um die Umlenkachse biegsam oder gegeneinander verschwenkbar sind, wobei jedes Glied jeweils zwei gegenüberliegende Seitenteile aufweist und an mindestens einem Seitenteil seitlich nach außen vorstehend, zumindest zu einer Seite hin, ein Befestigungsvorsprung zur Befestigung der Umhüllung am jeweiligen Glied vorgesehen ist.

Bereits durch diese Maßnahme wird erreicht, dass eine Relativbewegung und damit Abrieb zwischen der Umhüllung und der im Innenraum angeordneten Leitungsführung weitestgehend ausgeschlossen wird. Zugleich wird die Geräuschentwicklung minimiert und der bestimmungsgemäß korrekte Aufbau, insbesondere nach Wartungsarbeiten, auf einfache Weise sichergestellt.

Im nicht beanspruchten Beispiel haben die Seitenteile jedes Glieds erste Anschläge zur Begrenzung des Krümmungsradius in Bezug auf konkave Krümmung um die Umlenkachse und zweite Anschläge zur Begrenzung der entgegengesetzten konvexen Durchbiegung. Demnach kann eine einfach aufgebaute Umhüllung ohne eigene Trag- und Führungsfunktion verwendet werden.

Für die Vorgabe des Biegeverhaltens und Vermeidung von Abrieb ist es vorteilhaft, wenn Befestigungsvorsprünge jeweils beidseitig vorgesehen sind, d.h. an beiden gegenüberliegenden Seitenteilen eines Glieds. Vorzugsweise sind die Befestigungsvorsprünge auf Höhe der neutralen Faser an die Seitenteile angeformt. So können beispielsweise auch einfach hergestellte Halbschalen aus wellschlauchartigem Material oder andere biegsame Umhüllungsschalen an der Leitungsführung zuverlässig befestigt werden.

Vorteilhaft wird vorgesehen, dass die Befestigungsvorsprünge an den Seitenteilen ein in Längsrichtung durchgehendes Band bilden und die Umhüllung abschnittsweise und modular aus zwei Schalenteilen zusammengesetzt ist. So können die Schalenteile innen- und außenseitig, jeweils auf einfache Weise staubdicht, an den Befestigungsvorsprüngen befestigt werden.

In einem nicht beanspruchten Beispiel sind die Seitenteile, mit Ausnahme der Befestigungsvorsprünge, entsprechend der Lehre aus dem Patent EP 2 142 823 B1 ausgeführt. Hierbei hat jedes Seitenteil einen in Längsrichtung verlaufenden, um die Umlenkachse biegsamen Verbindungssteg, sowie mehrere zum Verbindungssteg im Wesentlichen senkrechte, T-förmige Stege, mit jeweils einem Fußsteg und einem Längssteg. Erste T-förmige Stege bilden an in Längsrichtung weisenden Stirnseiten ihrer Längsstege die ersten Anschläge zur Begrenzung des Krümmungsradius und gegenüberliegende zweite T-förmige Stege bilden an in Längsrichtung weisenden Stirnseiten ihrer Längsstege die zweiten Anschläge zur Begrenzung der Durchbiegung.

In einem nicht beanspruchten Beispielwird jeder Befestigungsvorsprung durch eine ebene, seitliche Verlängerung des entsprechenden Verbindungsstegs gebildet, und beispielsweise einstückig mit dem Seitenteil hergestellt.

Ferner sieht es in bevorzugter Weiterbildung vor, dass jedes Glied mit zwei Seitenteilen einstückig hergestellt ist, wobei jedes Seitenteil jeweils einen Befestigungsvorsprung sowie erste und zweite T-förmige Stege umfasst. Das Glied ist hierbei um die Umlenkachse biegsam ausgeführt, so dass eine Verkettung solcher Glieder eine Art Bandkette bildet.

Es liegt auch im Rahmen des zweiten , nicht beanspruchten Konzepts, eine Leitungsführung in der Art einer typischen Gliederkette, z.B. gemäß der Lehre aus WO 02/086349A1 oder aus EP 0 803 032 B1, mit erfindungsgemäßen Befestigungsvorsprüngen für die Umhüllung weiterzubilden.

Die Umhüllung kann insbesondere wellschlauchartig ausgeführt sein. Grundsätzlich sind auch andere schlauchartige Umhüllungen, z.B. aus besonders biegeelastischem Kunststoff, mit der Leitungsführungseinrichtung gemäß dem zweiten Erfindungskonzept verwendbar.

Schließlich können sowohl die Ausführungsformen der ersten, als auch der zweiten Erfindungsgruppe vorteilhaft hinsichtlich Abdichtung gegen Austritt von Feinstaub so weitergebildet werden, dass am ersten und am zweiten Ende der Einrichtung jeweils ein Anschlussflansch zum staubdichten Abschluss der stirnseitig offenen Enden der Umhüllung vorgesehen ist. Eine hierzu bevorzugte Weiterbildung sieht vor, dass jeder Anschlussflansch zwei staubdicht verbindbare Klemmschalen umfasst, welche an einem vorderen Endbereich kraft- und/oder formschlüssig die Umhüllung halten und diese staubdicht umgeben. Bevorzugt hat der Anschlussflansch Befestigungsmittel zur Befestigung, insbesondere zur Schraubverbindung mit der jeweiligen Anschlussstelle. Besonders bevorzugt weisen beide Klemmschalen jedes Anschlussflansches derartige Befestigungsmittel auf, so dass diese mit der Befestigung an der Anschlussstelle zugleich aneinander gesichert werden.

In bevorzugter Ausführungsform hat jeder Anschlussflansch in einem Endbereich, vorzugsweise dem vorderen Endbereich gegenüberliegend, eine geeignete Durchführdichtung zur staubdichten Durchführung der Leitungen.

Weitere Einzelheiten, Vorteile und Merkmale der Erfindungen lassen sich der nachfolgenden Erläuterung bevorzugter Ausführungsbeispiele anhand der beigefügten Zeichnungen entnehmen. Hierbei zeigen:
- FIG.1:: ein Prinzipschema einer erfindungsgemäßen Leitungsführungseinrichtung in Seitenansicht;
- FIG.2A-2C:: einen Abschnitt eines ersten nicht beanspruchten Beispiels einer Leitungsführungseinrichtung in perspektivischer Ansicht (FIG.2A), in einem vergrößerten Ausschnitt (FIG.2B) sowie im Längsschnitt parallel zur Krümmungs- bzw. Bewegungsebene des Umlenkbogens (FIG.2C);
- FIG.3A-3D:: einen Abschnitt eines zweiten , nicht beanspruchten Beispiels einer Leitungsführungseinrichtung in perspektivischer Ansicht (FIG.3A), in einem vergrößerten Ausschnitt (FIG.3B), im Längsschnitt parallel zur Krümmungs- bzw. Bewegungsebene des Umlenkbogens (FIG.3C) sowie im Querschnitt senkrecht zur Längsrichtung (FIG.3D);
- FIG.4A-4C:: einen Abschnitt eines Ausführungsbeispiels einer erfindungsgemäßen Leitungsführungseinrichtung in perspektivischer Explosionsdarstellung (FIG.4A), in perspektivischer, zusammengesetzter Ansicht (FIG.4B) sowie in vergrößerter Seitenansicht (FIG.4C);
- FIG.5:: eine Variante des Ausführungsbeispiels gemäß FIG.4A-4C mit mehreren Umhüllungen in einem vertikalen, die Innenseite des Umlenkbogens zeigenden Querschnitt;
- FIG.6A-6C:: ein weiteres, nicht erfindungsgemäßes Beispiel, bei welchem im Vergleich zum dritten Ausführungsbeispiel gemäß FIG.4A-4C ein Stützgerippe nicht außen, sondern innen an der Umhüllung vorgesehen ist;
- FIG.7A-7C:: ein nicht erfindungsgemäßes Beispiel einer Leitungsführungseinrichtung in perspektivischer, teilweise aufgebrochener Ansicht des Umlenkbogens (FIG.7A), einer entsprechenden Seitenansicht (FIG.7B) sowie in einem vergrößerten Ausschnitt (FIG. 7C);
- FIG.8A-8B:: eine Beispiel von Anschlussflanschen zur Befestigung der Enden einer Leitungsführungseinrichtung an der feststehenden bzw. beweglichen Anschlussstelle;
- FIG.9A-9C:: einen Modul-Abschnitt einer Alternativausführung eines Stützgerippes in perspektivischer Ansicht (FIG.9A), im Querschnitt (FIG.9B), sowie in vergrößerter Draufsicht auf Vorsprünge mit Anschlagfunktion (FIG.9C);
- FIG.10A-10C:: ein weiteres Beispiel eines Schalenteils für eine Umhüllung nach FIG.1-3 in einer Draufsicht der Innenseite (FIG.10A), einer teilweise aufgebrochenen Perspektivansicht der Umhüllung (FIG.10B) und einem Längsschnitt auf Höhe der Stirnenden (FIG.10C);
- FIG.11:: ein Prinzipschema einer Leitungsführungseinrichtung in Seitenansicht gemäß einem weiteren Beispiel;
- FIG.12:: eine Ansicht von zwei wellschlauchartigen Schalenteilen, welche gemäß einem weiteren nicht beanspruchten Aspekt zu einem Abschnitt einer Leitungsführungseinrichtung, insbesondere nach FIG.1, verbunden werden;
- FIG.13:: eine Vergrößerung der seitlichen Befestigungsbänder der Schalenteile aus FIG.12 in verbundenem Zustand;
- FIG.14A:: eine Vorderansicht eines Abschnitts einer Leitungsführungseinrichtung nach FIG.11-13;
- FIG.14B:: eine Vergrößerung gemäß Bereich XIV-B in Fig.14A;
- FIG.15:: eine Seitenansicht der Schmalseite eines Abschnitts einer Leitungsführungseinrichtung nach FIG.11-14, mit in Längsrichtung versetz verbundenen Schalenteilen; und
- FIG.16:: einen Schnitt nach Linien XVI-XVI in FIG.14A der dichten Verbindung der Stirnenden benachbarter Schalenteile.

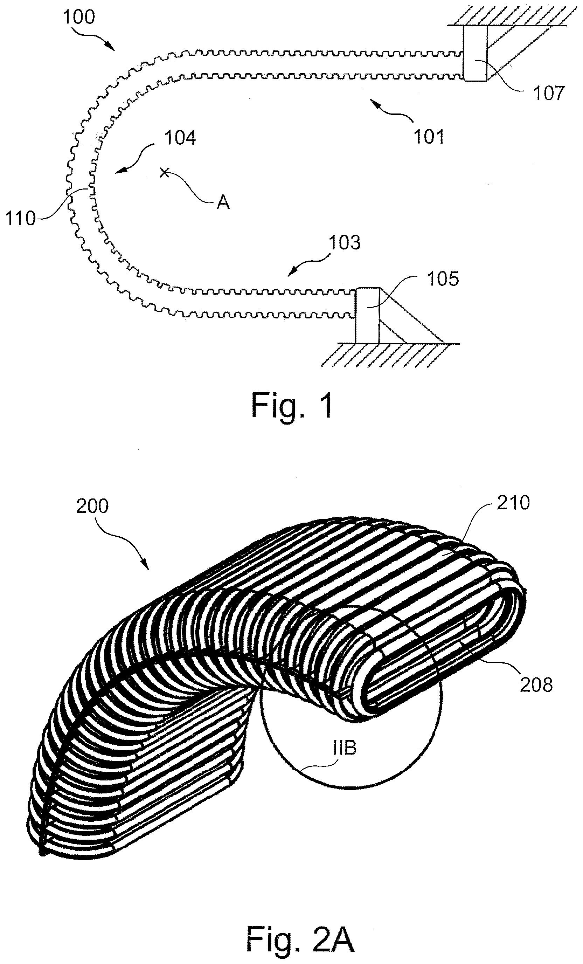

In FIG.1 ist eine schematisch gezeigte Leitungsführungseinrichtung allgemein mit 100 bezeichnet. Die Leitungsführungseinrichtung 100 dient zur geschützten Führung von Kabeln, Schläuchen oder ähnlichen Leitungen, welche in den Abbildungen nicht näher gezeigt sind. Zwischen einem Obertrum 101 und einem Untertrum 103 bildet die Leitungsführungseinrichtung 100 in bekannter Weise einen Umlenkbogen 104 mit vorgegebener Krümmung. Der Umlenkbogen 104 hat zur Vermeidung von Leitungsbrüchen insbesondere einen vorgegebenen, minimalen Krümmungsradius und gewährleistet damit, dass die zulässigen Krümmungsradien der geführten Leitungen nicht unterschritten werden.

Der Umlenkbogen 104 ist über eine Strecke relativ zum feststehenden Anschluss 105 zusammen mit dem beweglichen Anschluss 107 verfahrbar. Die Bewegung erfolgt im Wesentlichen in einer Ebene, welche hier etwa vertikal liegt, und folgt der Bewegung des beweglichen Anschlusses 107. Im gezeigten Beispiel liegt der feststehende Anschluss 105 am Obertrum 101 und der beweglichen Anschluss 107 am Untertrum 103. Die beiden Enden der Leitungsführungseinrichtung 100 können auch umgekehrt angeschlossen sein.

FIG.1 zeigt ferner schematisch als einen wesentlichen Aspekt der Erfindung eine biegsame Umhüllung 110, welche die im Innenraum geführten Leitungen in Umfangsrichtung und zwischen den beiden Anschlüssen 105, 107 durchgehend geschlossen und technisch staubdicht umgibt. Wie aus FIG.1 ersichtlich, ist die Umhüllung 110 schlauchartig und ausreichend flexibel ausgeführt, beispielsweise durch geeignete Gestaltung und/oder Materialwahl, um die fest vorgegebene Krümmung des Umlenkbogens 104 aufzunehmen und der Verfahrbewegung des Umlenkbogens 104 mit möglichst geringem Widerstand zu folgen.

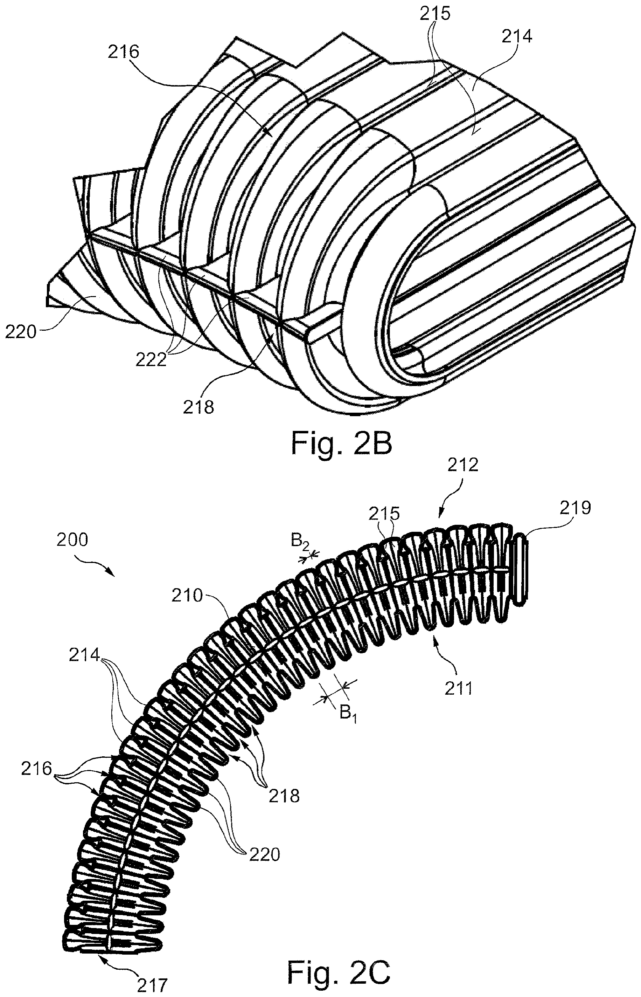

FIG.2A-2B zeigen ein erstes nicht beanspruchtes Beispiel einer Leitungsführungseinrichtung 200 mit einer Umhüllung 210. Die Umhüllung umgibt einen Innenraum 208 staubdicht, so dass Abriebpartikel nicht austreten können. Die Umhüllung 210 weist asymmetrisches Biegeverhalten in Bezug auf konkave und konvexe Krümmung um die Umlenkachse (schematisch mit A in FIG.1 angedeutet). Zu diesem Zweck weist die Umhüllung 210 an ihrer Innenseite 211 (d.h. der Breitseite radial innen) und ihrer Außenseite 212 (d.h. der Breitseite radial außen) wellschlauchartige aber jeweils verschiedenartige Profile auf. Wie FIG.2C veranschaulicht, hat das Profil an der Außenseite 212 Wellenberge 214, deren Form im Längsschnitt (FIG.2c) etwa Ω-förmig (Omega-förmig) gestaltet ist, so dass endseitig ausgebauchte Flanken 215 der Wellenberge 214 in Strecklage der Umhüllung 210 jeweils zu beiden Seiten der Wellenberge 214 miteinander im Anschlag stehen können. So kann in einfacher Weise erreicht werden, dass die Umhüllung 210 im Vergleich zur gewünschten konkaven Krümmung um die Umlenkachse A (vgl. FIG.1) nur geringe oder im Wesentlichen keine konvexe Durchbiegung in die andere Richtung gestattet. Die Umhüllung 210 selbst kann einen etwa gradlinigen Verlauf des Obertrums gewährleisten, auch wenn dieser mit dem Gewicht der geführten Leitungen (nicht gezeigt) belastet ist. Zur Verstärkung der Tragkraft des Profils an der Außenseite 212 ist ferner vorgesehen, dass an der Außenseite 212 die Wellentäler 216 zwischen den Wellenbergen 214 eine sehr geringe freie bzw. lichte axiale Breite B2 aufweisen, hier beispielsweise weniger als 20% der axialen Breite der Wellenberge 214 an der Außenseite 212. Die lichte axiale Breite B2 der Wellentäler 216 an der Außenseite 212 ist ferner deutlich geringer, als die entsprechende lichte axiale Breite B1 der Wellentäler 218 an der Innenseite 211.

Wie FIG.2C zeigt, kann die wellschlauchartige Umhüllung 210, im Längsschnitt durch den mittleren Bereich betrachtet, an der Innenseite 211 im Gegensatz zur Außenseite 212 ein herkömmliches Profil aufweisen, beispielsweise ein gerundetes Wellprofil (Engl. corrugated profile) mit Wellentälern 218 und Wellenbergen 220, deren größte Abmessung in Längsrichtung bzw. axiale Breite jeweils etwa gleich groß ist.

Im nicht beanspruchten Beispiel gemäß FIG.2A-2C wird die Leitungsführungseinrichtung 200 abschnittsweise aus Teilstücken der Umhüllung 210, wie in FIG.2A gezeigt, zusammengesetzt. Jedes Teilstück ist in diesem Beispiel in Längsrichtung und in Umfangsrichtung einstückig, insbesondere aus Kunststoff, hergestellt. Zur Verbindung von zwei Teilstücken der Umhüllung 210 weisen diese jeweils an einem stirnseitigen Ende einen vollständig umlaufenden Verrastungsring 219 auf. Die Verrastungsring 219 können in das gegenüberliegende Ende 217 in der Art einer Feder-Nut-Verbindung formschlüssig einrasten. Jeder Verrastungsring 219 hat hierbei im Vergleich zu der entsprechend konjugierten Aufnahme am gegenüberliegenden Ende 217 ein leichtes Übermaß, so dass ein staubdichter Presssitz realisiert werden kann.

Wie FIG.2B am besten zeigt, sind auf Höhe der neutralen Faser der Leitungsführungseinrichtung 200 am Übergang zwischen Innenseite 211 und Außenseite 212 flanschartige Längsverstrebungen 222 vorgesehen. Die Längsverstrebungen 222 sind einstückig mit dem Material verbunden, welches zwei benachbarte Wellenberge 214 an der Außenseite 212 der Umhüllung 210 bildet. So wird, zusammen mit den als Anschläge wirkenden Flanken 215 der Wellenberge 214, eine stabile Struktur ermöglicht, welche auch große freitragende Längen bei vollständiger Befüllung der Leitungsführungseinrichtung 200 ohne störende Durchbiegung gestattet. Um diesen Effekt zu verstärken, können die einstückig hergestellten Teilstücke, wie etwa FIG.2A zeigt, in belastungsfreier Lage bereits konkav vorgekrümmt sein, d.h. mit einer inhärenten Vorspannung in Bezug auf die Strecklage gefertigt werden. Die Längsverstrebungen 222 erhöhen zudem die Schub- und Druckfestigkeit d.h. die mechanische Belastbarkeit der Umhüllung 210, so dass eine Leitungsführungseinrichtung 200 mit großer Gesamtlänge realisiert werden kann.

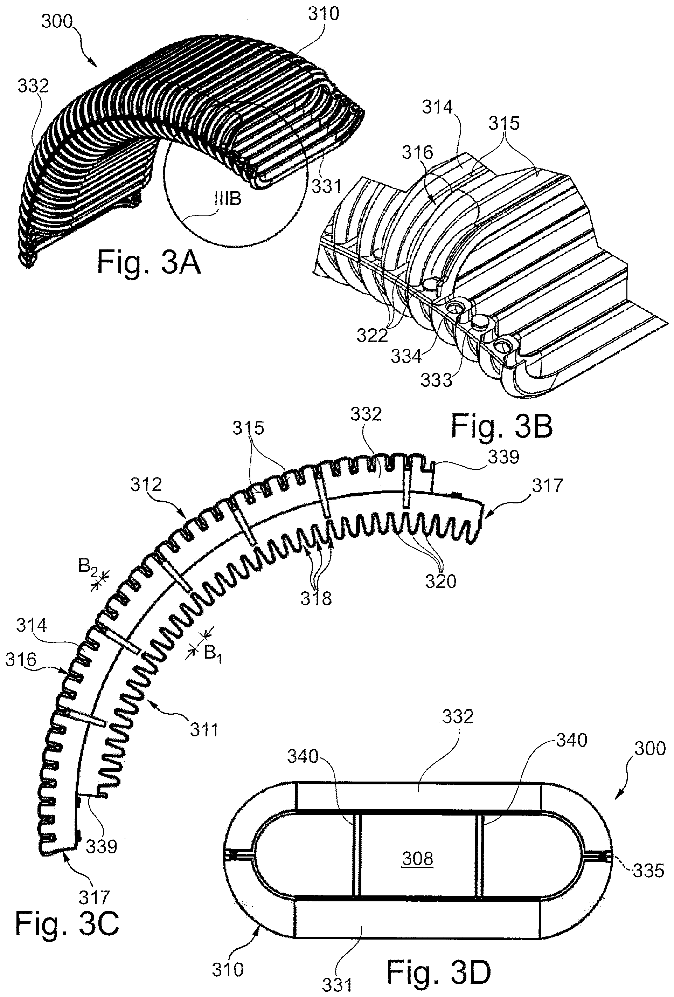

FIG.3A-3C zeigen ein weiteres nicht beanspruchtes Beispiel einer Leitungsführungseinrichtung 300, welche ebenfalls eine Umhüllung 310 mit asymmetrischen Biegeverhalten in Bezug auf die Krümmung konkav und konvex um die Umlenkachse A hat. Hierzu ist analog zu FIG.2A-2C an der Außenseite 312 ein anderes Profil vorgesehen, als an der Innenseite 311. Entsprechende oder identische Merkmale im Vergleich zu FIG.2A-2C sind demnach mit entsprechend erhöhten Bezugszeichen versehen und werden nicht wiederholt beschrieben.

Ein wesentlicher Unterschied des zweiten Beispiels nach FIG.3A-3D liegt darin, dass die Teilstücke zum abschnittsweisen Zusammensetzen der Umhüllung 310, anders als in FIG.2A-2C, jeweils aus zwei separat hergestellten Schalenteilen 331, 332 zusammengesetzt sind, wobei ein Schalenteil 331 mit einem Profil die Innenseite 311 der Umhüllung 310 und das andere Schaltenteil 332 mit einem verschiedenartigen Profil die Außenseite 312 bildet.

Wie die Vergrößerung FIG.3B zeigt, liegt die Schnittstelle 335 zur Verbindung der Schalenteile 331, 332 miteinander auf Höhe der neutralen Faser der Leitungsführungseinrichtung 300. Die Verbindung kann, wie FIG.3B beispielhaft veranschaulicht, mittels beliebiger form- und/oder kraftschlüssiger Verbindung realisiert werden. Beim Beispiel nach FIG.3A-3D weisen beide Schalenteile 331, 332 an der Schnittstelle 335 jeweils in den Wellentälern 316 bzw. 318 alternierend angeordnete Druckknöpfe 333 und entsprechend konjugiert geformte Aufnahmen 334 auf. Auch andere für eine staubdichte Verbindung der Schalenteile 331, 332 geeignete Befestigungsmittel liegen im Rahmen der Erfindung. Sofern keine stoffschlüssige Verbindung verwendet wird, erleichtert das zweite Beispiel nach FIG.3A-3D gegenüber dem ersten Beispiel in FIG.2A-2C die Wartung, da einzelne Längsabschnitte der Leitungsführungseinrichtung 300 leichter zugänglich sind.

Wie FIG.3A-3C zeigen, werden die Schalenteile 331, 332 bevorzugt unter einem gewissen Längsversatz relativ zueinander aneinander befestigt, ähnlich einem Mauerwerksverband (Engl. brickwork course). So können die zur Verbindung von zwei gegenüberliegenden Schalenteilen 331, 332 miteinander vorgesehenen Befestigungsmittel, beispielsweise Druckknöpfe 333 und entsprechende Ausnehmungen 334, zugleich zur Verstärkung der Längsverbindung der Teilabschnitte der Umhüllung 310 in Längsrichtung genutzt werden. Demnach wird an der Schnittstelle 335 eine in Zugrichtung scherfeste Verbindung der Schalenteile 331, 332 bevorzugt. Zur Abdichtung gegen ein Austreten von abriebbedingtem Feinstaub weist jedes Schalenteil 331, 332 vorzugsweise an einem Ende eine Art Dichtlippe 339 auf, welche in den endseitigen Wellenberg 314 am jeweils gegenüberliegenden Ende 317 dichtend eingreift.

FIG.3D zeigt einen weiteren Unterschied des zweiten Beispiels im Vergleich zu FIG.2A-2C. Durch die zweiteilige Herstellung der Längsstücke der Umhüllung 310 können an einem der beiden Schalenteile 331, 332, beispielsweise am die Außenseite 312 bildenden Schalenteil 332, in der Bewegungsebene verlaufende Trennstege angeordnet werden zur Aufteilung des Innenraums 308. Durch die Trennstege 340 können die verschiedenen Leitungen voneinander getrennt geführt werden, wodurch Abrieb zwischen diesen Leitungen weitestgehend vermieden wird.

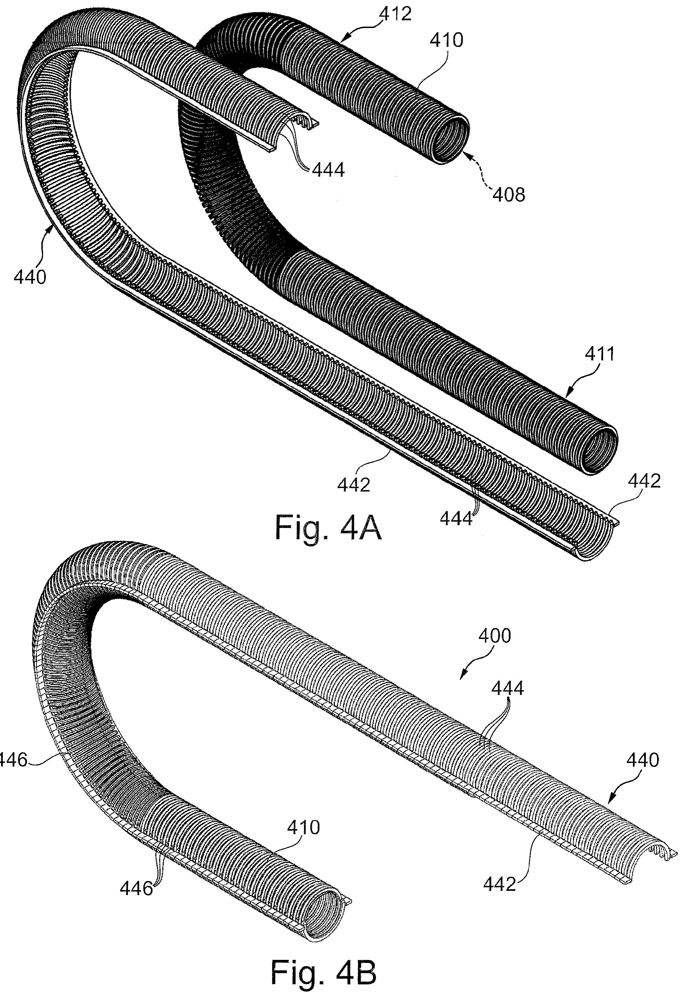

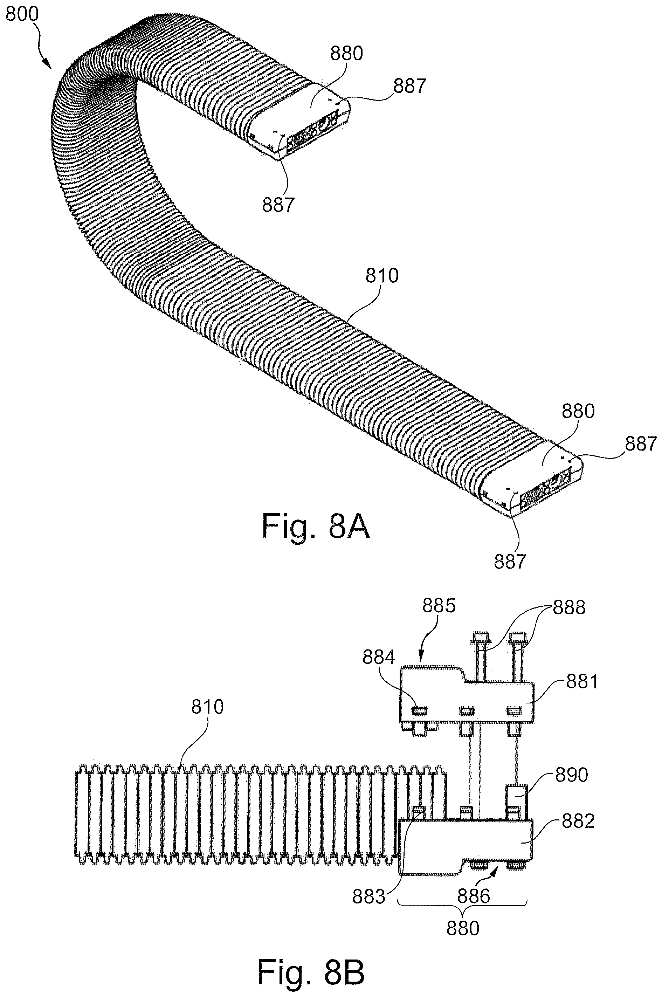

FIG.4A-4C zeigen eine Ausführungsform einer Leitungsführungseinrichtung 400. Diese besteht, abgesehen von Anschlussflanschen zum staubdichten Befestigen der Enden (wie in FIG.8A-8B beispielhaft gezeigt), aus lediglich zwei wesentlichen Bestandteilen, nämlich einer Umhüllung 410 und einem speziell gefertigten Stützgerippe 440. Die in FIG.4A einzeln gezeigte Umhüllung 410 kann als herkömmlicher Wellschlauch ausgeführt sein. Demnach kann der Wellschlauch 410 für sich genommen ein symmetrisches Biegeverhalten in jede Richtung haben, d.h. auch in Bezug auf konkave oder konvexe Krümmung um die Umlenkachse des Umlenkbogens 104 (FIG.1). Zur Gewährleistung eines asymmetrischen Biegeverhaltens mit einer erheblich reduziert konvexen Biegsamkeit im Vergleich zur konkaven Krümmung um die Umlenkachse A, wird im Ausführungsbeispiel gemäß FIG.4A-4C das separat hergestellte Stützgerippe 440 von außen, in Bezug auf den Umlenkbogen 104 an der Außenseite 412 des Wellschlauchs 410, angebracht.

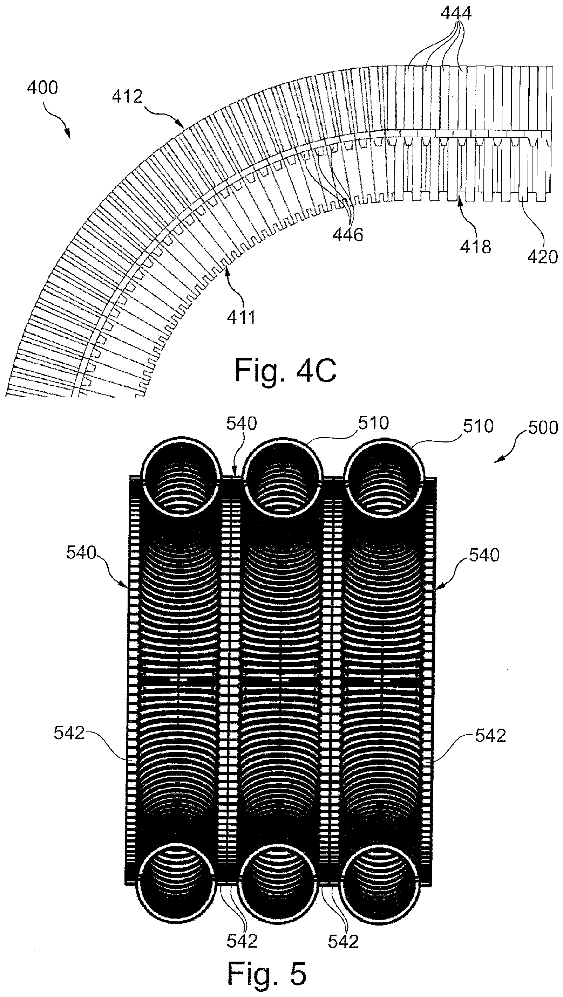

Das Stützgerippe 440 ist im Biegeverhalten asymmetrisch. Es lässt sich leicht konkav um die Umlenkachse A biegen, jedoch nur begrenzt konvex in die entgegengesetzte Richtung. Wie am besten aus FIG.4C ersichtlich, weist das Stützgerippe 440 zwei gegenüberliegende, in Längsrichtung verlaufende Träger 442 auf, an welchen im Wesentlichen senkrecht, in Umfangsrichtung verlaufende Querrippen 444 vorgesehen sind. Die Träger 442 und Querrippen 444 können einstückig aus Kunststoff beispielsweise im Spritzgussverfahren hergestellt werden.

Formgebung und Verlauf der Querrippen sind der Außenkontur des Querschnitts der Umhüllung 410 angepasst. Bei einem Wellschlauch 410 mit etwa kreisrundem Querschnitt sind die Querrippen 444 wie in FIG.4A-4B etwa kreisbogenförmig und haben ein Bogenmaß von etwa 180° (vgl. auch FIG.5). Die in Umfangsrichtung verlaufenden Querrippen 444 des Stützgerippes 440 sind parallel zueinander jeweils in regelmäßigem, vorgegebenem Abstand an den Trägern 442 befestigt. Wie FIG.4C am besten zeigt, dienen die Querrippen 444 hauptsächlich dazu, die ansonsten freien Wellentäler 420 an der Außenseite 412 des Wellschlauchs 410 weitestgehend zu füllen bzw. zu schließen. Auf diese Weise wird an der Außenseite 412 durch die Wellentäler 420 die Flexibilität bzw. Biegsamkeit in Richtung entgegen der konkaven Krümmung um die Umlenkachse A erheblich reduziert oder, je nach Wellprofil des Wellschlauchs 410, vollständig unterbunden. Das Stützgerippe 440 ist damit vorzugsweise so ausgeführt, dass der regelmäßige Abstand zwischen den Querrippen 444 der Wellenlänge, d.h. dem periodischen Abstand zwischen zwei aufeinander folgenden Wellentälern 420 des Wellschlauchs 410, entspricht. So wird erreicht, dass in jede Welle des Wellprofils genau eine Querrippe 444 eingreift.

Zusätzlich zur Funktion als Verstärkung des Wellschlauchs 410 hat das Stützgerippe 440 auch die Wirkung, die neutrale Faser auf Höhe der gegenüberliegenden Träger 442 zu definieren und zugleich auch die Bewegungsebene des Umlenkbogens 104 (FIG.1) festzulegen. Nicht näher gezeigt sind Anschlussmittel an den Enden des Stützgerippes 440, um die Träger 442 jeweils fest mit den Anschlussstellen zu verbinden (vgl. FIG.8). Durch die Träger 442 kann das Stützgerippe 440 zusätzlich Zug- und Druckkräfte abfangen und die Lebensdauer und Belastbarkeit des Wellschlauchs 410 erhöhen. Das Stützgerippe 440 hat demnach vorzugsweise eine Längserstreckung, welche der Gesamtlänge der Leitungsführungseinrichtung 400 von der einen Anschlussstelle zur anderen Anschlussstelle 105, 107 (FIG.1) entspricht.

Schließlich zeigt FIG.4C in tangentialer Verlängerung der Querrippen 444 beidseitig vorgesehene laschen- oder zungenartige Fortsätze 446. Die Fortsätze 446 sind in Seitenansicht etwa keil oder V-förmig. Die Fortsätze 446 und haben im Vergleich zum Umfang des Wellschlauchs 410 eine sehr kurze Erstreckung in Umfangsrichtung und bilden einen vorgegebenen Öffnungswinkel zwischen den in Längsrichtung gewandten stirnseitigen Schenkeln. Die Fortsätze 446 greifen, wie FIG.4B-4C zeigen, über ein geringes Umfangsmaß außenseitig in die Wellentäler 420 des Wellschlauchs 410 ein. Durch ein vorbestimmtes Winkelmaß des Öffnungswinkels zwischen den gegenüberliegenden Schenkeln der Fortsätze 446 wird der minimale Krümmungsradius des Umlenkbogens 104 der Leitungsführungseinrichtung 400 aus Wellschlauch 410 und Stützgerippe 440 vorgegeben.

FIG.5 zeigt eine Weiterbildung des Ausführungsbeispiels nach FIG.4A-4C. In diesem Ausführungsbeispiel besteht die Leitungsführungseinrichtung 500, abgesehen von den endseitigen Anschlussflanschen, im Wesentlichen aus drei seitlich nebeneinander und parallel angeordneten Wellschläuchen 510, welche durch Stützgerippe 540 parallel gehalten werden. Hierzu sind drei Stützgerippe 540, im Aufbau identisch zu FIG.4A-4C, jeweils seitlich mit ihren Trägern 542 aneinander befestigt. Die Stützgerippe 540 sind bevorzugt als separate Einzelteile hergestellt und weisen zur Verbindung mit dem benachbarten Stützgerippe 540 geeignete Verbindungsmittel an den Trägern 542 auf. Grundsätzlich können auch mehrere Stützgerippe 540 aus einem Stück zusammenhängend hergestellt sein.

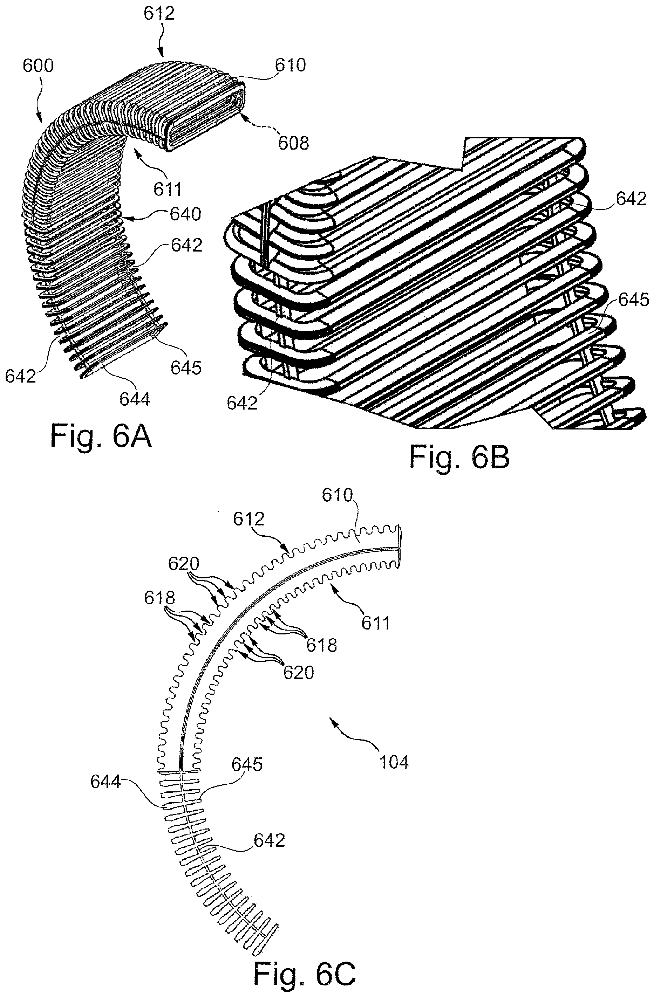

FIG.6A-6C zeigt ein nicht erfindungsgemäßes Beispiel einer Leitungsführungseinrichtung 600. Die Leitungsführungseinrichtung 600 kann ebenfalls im Wesentlichen aus einem herkömmlichen Wellschlauch als Umhüllung 610, hier mit etwa rechteckigem Querschnitt, und einem separaten Stützgerippe 640 zur Erzielung eines asymmetrischen Biegeverhaltens bestehen. Anders als im Beispiel nach FIG.4A-4C ist das Stützgerippe 640 der Leitungsführungseinrichtung 600 nicht von außen am Wellschlauch 610, sondern innen in der als Wellschlauch ausgeführten Umhüllung 610 angeordnet. Als weiteren wesentlichen Unterschied weist das Stützgerippe 640 sowohl zur Außenseite 612 zugewandte Querrippen 644 als auch zur Innenseite 611 zugewandte Querrippen 645 auf. Die äußeren Querrippen 644 greifen von innen in den Hohlraum der Wellenberge 620 an der Außenseite der Umhüllung 610. Die innenliegenden Querrippen 645 greifen von innen entsprechend in den Hohlraum der Wellenberge 620 an der Innenseite 611 der Umhüllung 610. Die wellschlauchartige Umhüllung 610 an sich kann an beiden Seiten ein identisches, herkömmliches Wellprofil mit beiderseits identisch geformten Wellentälern 618 und Wellenbergen 620 aufweisen. Die Umhüllung 610 kann, anders als in den Figuren gezeigt, zwischen beiden Enden durchgehend hergestellt sein. Das Stützgerippe 640 kann durchgehend einstückig hergestellt oder aus einzelnen Abschnitten zusammengesetzt werden, die nacheinander in die Umhüllung 610 eingeführt werden. Alternativ zu einem herkömmlichen Wellschlauch mit an sich symmetrischem Biegeverhalten ist es auch denkbar, analog zu FIG.2A-2C bzw. FIG.3A-3D, die Umhüllung 610 abschnittsweise aus ein- oder zweiteiligen Modulen zusammenzusetzen. Im letztgenannten Fall kann das Wellprofil an der Innenseite 611 anders als das Wellprofil an der Außenseite 612 ausgeführt sein.

Das asymmetrische Biegeverhalten wird mit dem Stützgerippe 640 maßgeblich dadurch erzielt, dass die Querrippen 644 an der Außenseite 612 eine größere axiale Breite aufweisen, als die Querrippen 645 an der Innenseite 611. Auf diese Weise wird, wie bereits bei den vorhergehenden Ausführungsbeispielen, sichergestellt, dass die Umhüllung 610 an ihrer Außenseite 612 axial bzw. in Längsrichtung eine geringere Stauchbarkeit aufweist, als an ihrer Innenseite 611. Das Stützgerippe 640 ermöglicht, aufgrund der unterschiedlich geformten Querrippen 644 bzw. 645 an Innen- und Außenseite 611 bzw. 612, einerseits die Verstärkung der Umhüllung 610 gegen Durchbiegen im freitragenden Ober- oder Untertrum 101 bzw.103 und andererseits zugleich die Begrenzung auf einen vorgegebenen Krümmungsradius im Umlenkbogen 104. Die innen liegenden Querrippen 644 haben hierzu eine geringere axiale Breite als die außen liegenden Querrippen 645.

Wie bereits beim Beispiel nach FIG.4A-4C wird zudem durch gegenüberliegende Träger 642, an welchen die umlaufenden Querrippen 644, 645 befestigt sind, eine definierte neutrale Faser für den Biegeverlauf der Umhüllung 610 vorgegeben. Die Träger 642 können auch zum Abfangen von Schub- und Zugkräften genutzt werden bei entsprechender Befestigung aneinander bzw. an den Anschlussstellen.

Bei allen vorhergehenden Ausführungsbeispielen werden die nicht näher gezeigten Leitungen unmittelbar im Innenraum 208; 308; 408... aufgenommen und von der Umhüllung geführt und getragen. Eine besondere, zusätzliche Leitungsführung ist hierzu in den Beispielen nach FIG.2-6 nicht erforderlich.

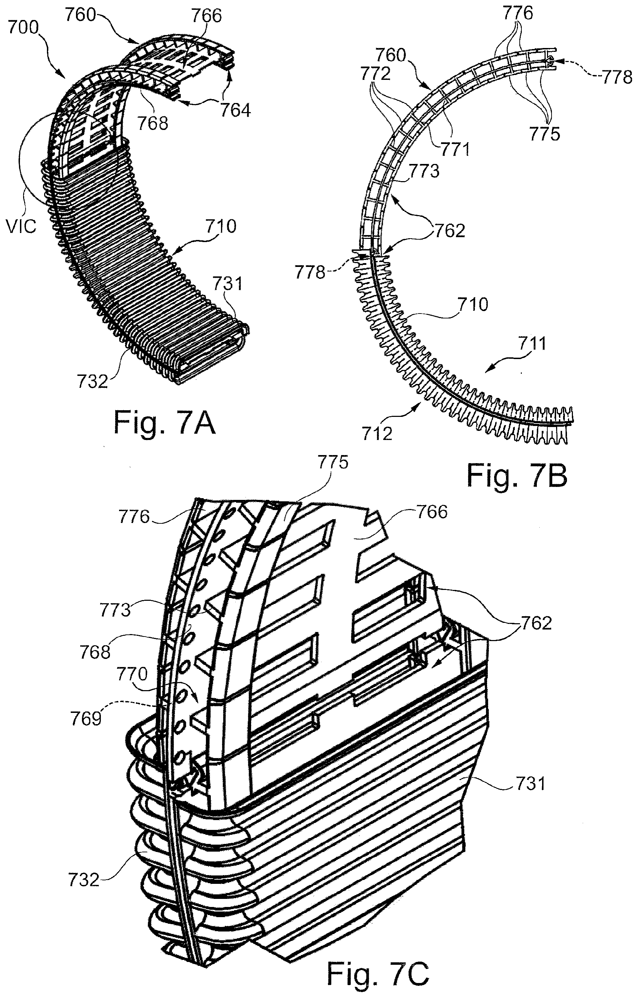

FIG.7A-7C zeigen eine Leitungsführungseinrichtung 700 nach einem von den vorhergehenden Ausführungsbeispielen verschiedenen und nicht erfindungsgemäßen unabhängigen Prinzip.

Die Leitungsführungseinrichtung 700 gemäß FIG.7A-7C besteht im Wesentlichen aus einer bandartigen Leitungsführung 760, aus in Längsrichtung aneinander befestigten einzelnen Teilstücken 762, und einer staubdichten ein- oder mehrteiligen Umhüllung 710. Jedes Teilstück 762 als Glied der Leitungsführung 760 hat ein linkes und ein rechtes Seitenteil 764, welche über ein durchgehendes Trägerband 766 einstückig verbunden sind, oder alternativ als separate Teile seitlich daran befestigt werden. Das Trägerband 766 ist um die Umlenkachse biegsam und aus einem flexiblen zugfesten Kunststoff hergestellt. Zur Verbesserung der Biegsamkeit um die Umlenkachse ist das Trägerband 766 mit einem Lochmuster versehen, dessen längliche Löcher quer zur Längsrichtung verlaufen. Die staubdichte Umhüllung 710 ist aus Längsschnitten mit jeweils zwei Schalenteilen 731 bzw. 732 modular zusammengesetzt.

Wie am besten aus FIG.7C ersichtlich, weisen die Teilstücke 762 der Leitungsführung 760 jeweils seitlich von den Seitenteilen 764 nach außen vorstehende Befestigungsvorsprünge 768 auf. Die Befestigungsvorsprünge 768 haben in regelmäßigen Abständen aufeinander folgende Befestigungsmittel 769.

Die Befestigungsvorsprünge 768 dienen zur Befestigung eines inneren und äußeren Schalenteils 731 bzw. 732 einer Umhüllung 710. FIG.7B zeigt als Befestigungsmittel 769 bspw. Ösen zur Befestigung mittels Rastverbindung, wie mittels einer Druckknopfbefestigung oder dgl. Auch andere form- und/oder kraftschlüssige Befestigungsmittel 769 liegen im Rahmen der Erfindung, etwa eine Feder-/Nut-Verbindung oder sonstige geeignete Kunststoffverschlüsse z.B. wie im Patent US2613421A.

Die Befestigungsvorsprünge 768 bilden vorzugsweise einstückige, ebene Verlängerungen des Trägerbands 766. Die Befestigungsvorsprünge 768 und das Trägerband 766 sind auf Höhe der neutralen Faser der Leitungsführungseinrichtung 700 angeordnet bzw. geben diese vor. Zugleich wird so die Bewegungsebene des Umlenkbogens 104 (vgl. FIG.1) vorgegeben. So liegt auch die Schnittstelle zwischen den Schalenteilen 731 bzw. 732 auf Höhe der neutralen Faser.

Jedes Seitenteil 764 hat einen in Längsrichtung verlaufenden, um die Umlenkachse biegsamen Verbindungssteg 770, welcher gegebenenfalls einstückig mit dem Trägerband 766 hergestellt ist, und der Übertragung von Druck- und Zugkräften dient. Ein weiterer Verbindungsteg kann zur Querstabilisierung, wie FIG.7C am besten zeigt, mittig im Trägerband 766 vorgesehen werden.

Senkrecht zum Trägerband 766 bzw. Verbindungssteg 770 sind an jedem Seitenteil 764 im Wesentlichen T-förmige Stege 771 bzw. 772 zur Innenseite 711 bzw. zur Außenseite 712 angeformt. Die T-förmigen Stege 771, 772 haben jeweils einen Fußsteg 773 und einen in Längsrichtung verlaufenden Längssteg 775 bzw. 776. Die innenliegenden T-förmigen Stege 771 bilden an den in Längsrichtung weisenden Stirnseiten ihrer Längsstege 775 erste Anschläge zur Begrenzung des Krümmungsradius im Umlenkbogen 104. Die gegenüberliegenden zweiten T-förmigen Stege 772 andererseits bilden an den in Längsrichtung weisenden Stirnseiten ihrer Längsstege 776 zweite Anschläge zur Begrenzung der konvexen Durchbiegung in die entgegengesetzte Richtung. Aufbau, Anordnung und Wirkweise der T-förmigen Stege 773, 776 entsprechen dem bevorzugten Ausführungsbeispiel der T-förmigen Stege im Patent EP 2 142 823 B1, auf dessen Inhalt zur Vermeidung unnötiger Wiederholung insoweit vollumfänglich Bezug genommen wird.

Die Leitungsführung 760 unterscheidet sich von der bandkettenartigen Leitungsführungseinrichtung gemäß EP2142823B1 insbesondere durch die Befestigungsvorsprünge 768 zur Befestigung der Umhüllung 710. Ein weiter Unterschied liegt in der einstückigen Herstellung der Teilstücke 762, d.h. Seitenteile 764 und Trägerband 766 sind aus einem Stück hergestellt. Ansonsten können Aufbau und Wirkweise dem bevorzugten Ausführungsbeispiel aus EP2142823B1 entsprechen, insbesondere hinsichtlich der formschlüssigen Verbinder 778 endseitig an den Seitenteilen zur Verkettung der Teilstücke 762 in Längsrichtung.

Die Umhüllung 710 im Ausführungsbeispiel nach FIG.7A-7C kann grundsätzlich beliebig ausgeführt sein, sofern Sie staubdicht geschlossen ist. Die Umhüllung 710 kann für sich genommen ein asymmetrisches Biegeverhalten hinsichtlich konkaver und konvexer Krümmung um die Umlenkachse A (vgl. FIG.1) aufweisen, oder aber diesbezüglich ein symmetrisches Biegeverhalten. Die Begrenzung des Krümmungsradius im Umlenkbogen 104 wird bei der Leitungsführungseinrichtung 700 durch die innenliegenden T-förmigen Stege 771 der Leitungsführung 760 gewährleistet. Große freitragende Längen andererseits werden durch die außenliegenden T-förmigen Stege 772 sichergestellt. Die Befestigung der Schalenteile 731, 732 der Umhüllung 710 an der Leitungsführung 760 kann auf eine beliebige, zur staubdichten Verbindung geeignete an sich bekannte Art erfolgen, wobei lösbare Verbindungen bevorzugt sind.

FIG.7A-7C zeigen eine Umhüllung 710, welche abschnittsweise aus zwei Schalenteilen 731, 732 zusammengesetzt ist und an beidseitigen Befestigungsvorsprüngen 768 gesichert sind. In einer hier nicht gezeigten Alternativausführung kann auch eine einteilige, im Umfang aufklapp- bzw. aufzubiegende Umhüllung lediglich einseitig an einem der Seitenteile 764 befestigt werden. Hierzu ist es somit ausreichend, wenn Befestigungsvorsprünge 768 lediglich an einer Seite vorgesehen sind.

FIG.8A-8B zeigen eine bevorzugte Ausführung geeigneter Anschlussflansche 880 zur endseitigen Befestigung einer der vorstehend beschriebenen Leitungsführungseinrichtungen an den Anschlussstellen 105, 107 (vgl. FIG.1). Im Beispiel nach FIG.8A-8B ist die Umhüllung 810 als Wellrohr bzw. Wellschlauch mit paralleler Wellung und langlochförmigem bzw. länglichem Querschnitt gezeigt, wie z.B. in FIG.2A-2C, FIG.3A-3D oder FIG.7A-7C.

FIG.8B zeigt in Explosionsansicht lediglich einen Teil der Umhüllung 810 bzw. der Leitungsführungseinrichtung 800, nämlich einen der beiden analog ausgeführten Endbereiche, welche jeweils mit einem identisch ausgeführten Anschlussflansch 880 befestigt werden. Die Anschlussflansche 880 dienen zugleich dem staubdichten Abschluss der offenen Enden der Umhüllung 810 und deren Befestigung an den Anschlussstellen 105, 107.

Zum Abdichten und Befestigen ist jeder Anschlussflansch 880 aus zwei zusammenwirkenden Klemmschalen 881, 882 zusammengesetzt, welche als staubdicht verbindbare, deckelartige Spritzguss-Formteile gestaltet sind. Die Klemmschalen 881, 882 sind durch Schnapphaken 883 und Aussparungen 884 miteinander verrastbar, wobei auch andere form- und/oder kraftschlüssige Verbindungen, insbesondere lösbare Rastverbindungen möglich sind. Die geschlossenen Klemmschalen 881, 882 halten an einem vorderen Endbereich 885 kraft- und/oder formschlüssig, insbesondere formschlüssig durch Eingriff in ein oder mehrere Wellentäler, die Umhüllung 810 in Längsrichtung fest und dichten die Umhüllung 810 umfänglich staubdicht ab, ggf. mittels einer nicht gezeigten zusätzlichen Dichtung.

Wie FIG.8A-8B zeigen sind an beiden Klemmschalen 881, 882 zur Befestigung zwei Paar Durchgangsöffnungen 887 für Verbindungsschrauben 888 vorgesehen. Die Durchgangsöffnungen 887 für Verbindungsschrauben 888 im hinteren Endbereich 886 erlauben zugleich die Befestigung einer Durchführdichtung 890 zur staubdichten Durchführung der Kabel, Schläuche. Die Durchführdichtung 890 kann z.B. durch die Verbindungsschrauben 888 auf die Leitungen geklemmt werden. Durch diese Gestaltung der Klemmschalen 881, 882 kann in einem Arbeitsschritt die Abdichtung der Umhüllung 810 und das Befestigen der Enden der Leitungsführung 800 an den Anschlüssen 105, 107 (cf. FIG.1) erfolgen.

Die separate Durchführdichtung 890 in jedem Anschlussflansch 880 ist bevorzugt kompressibel und/oder mit Aussparungen für die Leitungen versehen. Die Durchführdichtung 890 kann z.B. als einstückiger Polyurethan-Block oder als mehrlagiger Neoprenstapel ausgeführt sein. Im hinteren Endbereich der Klemmschalen 881, 882 ist jeweils eine innenliegende Halterung für die Durchführdichtung 890 vorgesehen.

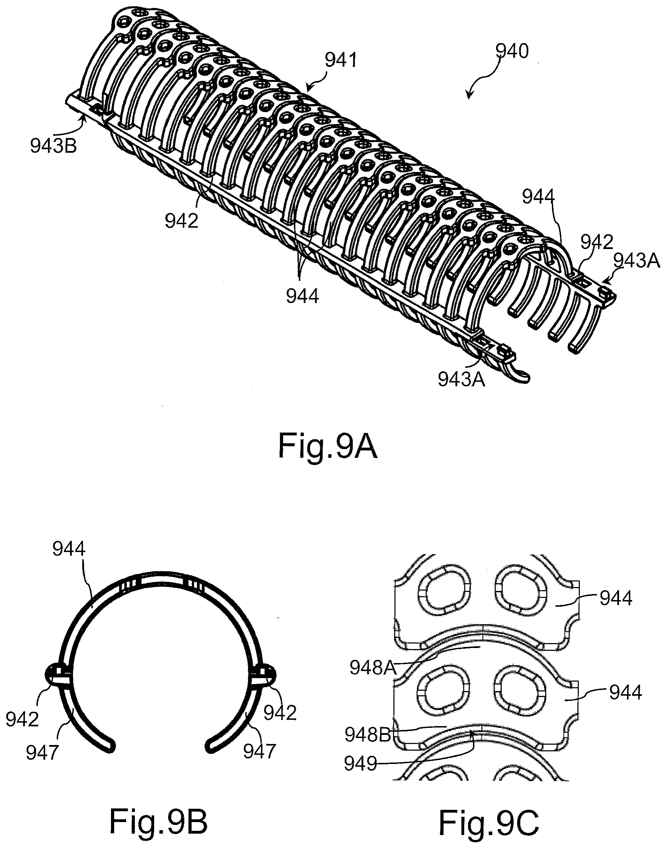

FIG.9A-9C zeigen einen Längsabschnitt einer weiteren Ausführungsform eines Stützgerippes 940, nämlich ein langgestrecktes Modul 941 zum abschnittsweisen Zusammenfügen mit weiteren identischen Modulen 941. Hierzu sind endseitig an Trägersträngen 942 konjugierte Clipverbinder 943A, 943B mit Rastclips und -aufnahmen vorgesehen, um die Module 941 bzw. Trägerstränge 942 längs miteinander zu verketten. Das Stützgerippe 940 bzw. Modul 941 ist einstückig bzw. integral aus dauerbiegefestem Kunststoff hergestellt und hat u.a. eine Vielzahl von Querrippen 944. Die Querrippen 944 verlaufen im Querschnitt kreisbogenförmig über ca. den halben Umfang zwischen den beiden in Längsrichtung parallelen Trägersträngen 942 und sind dabei in regelmäßigem Längsabstand zueinander parallel angeordnet. Ebenfalls regelmäßig parallel erstrecken sich jeweils gegenüberliegend im Querschnitt (FIG.9B) eine Vielzahl paarweise spiegelsymmetrisch angeordneter Haltearme 947. Die Haltearme 947 verlaufen ebenfalls im Wesentlichen kreisbogenförmig im Querschnitt, jeweils nur über einen Anteil des Umfangs, z.B. über ca. ein Achtel des Umfangs. Die Haltearme 947 können aufspreizen, um das Stützgerippe 940 radial auf einem Wellschlauch (hier nicht gezeigt, vgl. 410 in FIG.4A) anzubringen. Die Haltearme 947 können in Längsrichtung mittig zwischen den Querrippen 944 in die Trägerstränge 942 übergehen.

Durch geeignete Flexibilität um die Längsachse und aufgrund der Haltearme 947 kann ein Stützgerippe 940 aus Modulen 941, besser als das Stützgerippe in FIG.4A-4C, zusammen mit Wellschlauch mit beliebigem Wellprofil, einschließlich wendel- oder schraubenförmigem Profil, und innerhalb Toleranzgrenzen auch mit unterschiedlichen Durchmessern verwendet werden. Die Haltearme 947 klammern an der äußeren Oberfläche des Wellschlauchs und müssen nicht in Wellentäler eingreifen. Zudem wird so die Montage am Wellschlauch spürbar erleichtert.

Zur Begrenzung des minimalen Krümmungsradius im Umlenkbogen bzw. Umlenkbereich (FIG.1) können Zwischenabstand und Breite der Haltearme 947 in Längsrichtung anwendungsgemäß eingestellt werden. So können insbesondere sehr kleine Radien mit besonders flexiblem Wellschlauch realisiert werden.

Zur Versteifung gegen Durchbiegen entgegen der gewünschten Krümmung, insbesondere von sehr flexiblem Wellschlauch , weisen die Querrippen 944 gegenüberliegend zur Öffnung zwischen den Haltearmen 947 in Längsrichtung vorstehende bzw. axial ausbuchtende Vorsprünge 948A, 948B auf, die integral mit den Querrippen 944 geformt sind. Die gegenüberliegenden Vorsprünge 948A, 948B sind in Draufsicht konjugiert geformt, z.B. mit einer Halbmond- bzw. Sichelform des einen Vorsprungs 948A und einer dazu im Radius passenden Aussparung 949 am anderen Vorsprung 948B. Die Vorsprünge 948A, 948B wirken als Anschläge, mit denen die Querrippen 944 in Strecklage nach FIG.9A aneinander anliegen. Durch konjugierte Formgebung der Vorsprünge 948A, 948B kann im Anschlag eine zentrierende bzw. richtungsgebende Wirkung und auch eine seitlich, d.h. gegen Ausbrechen quer zu gewünschten Krümmungsrichtung, stabilisierende Wirkung erreicht werden, wie am besten aus FIG.9C ersichtlich. Durch die Kreisbogenform wird die wirksame Anschlagfläche vergrößert. Zudem kann ein Eingriff zwischen den axialen Vorsprüngen 948A, 948B auch zu einem gewissen Grad gegen Torsion versteifen.

In Verbindung mit einem Stützgerippe 940 aus Modulen 941 kann, wie bereits bei FIG.4-5, herkömmlicher Wellschlauch als Umhüllung mit vordefiniertem Krümmungsverhalten, d.h. als Leitungsführung zwischen zwei relativbeweglichen Anschlussstellen (cf. FIG.1) genutzt werden.

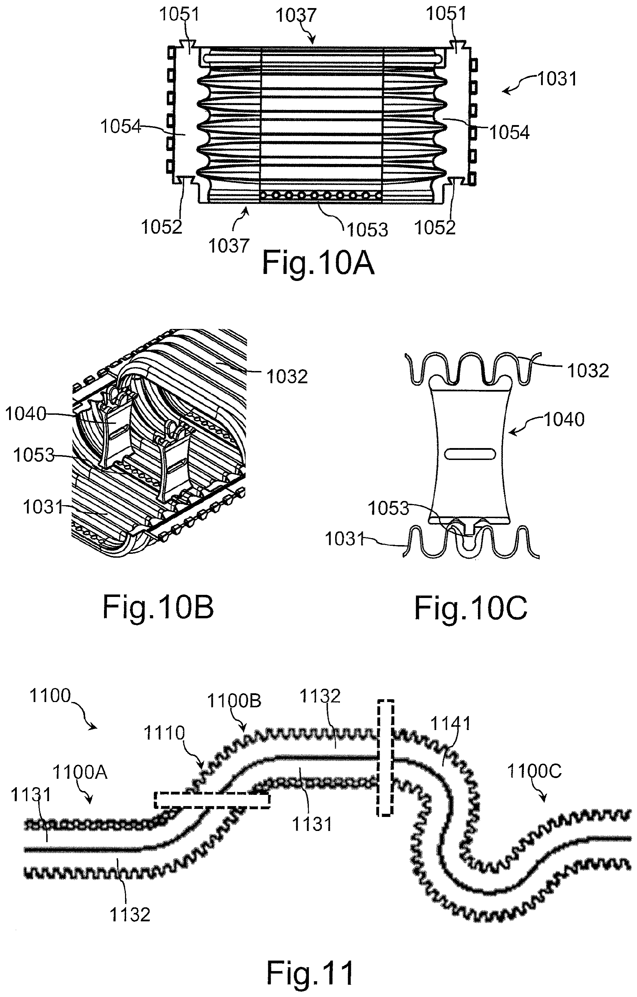

FIG.10A-10C zeigen ein zu FIG.3A-3D alternativen Beispiel von Schalenteilen 1031, 1032, wobei nur die wesentlichen Unterschiede im Aufbau erläutert werden. Das Schalenteil 1031 nach FIG.10A-10C hat an einem Stirnende 1037, welches die Dichtlippe zum Eingriff in das gegenüberliegende Stirnende (nicht gezeigt) aufweist, eine innere Lochleiste 1053 mit senkrecht zur Längsrichtung regelmäßig angeordneten Blindlöchern. In die Blindlöcher der Lochleiste 1053 kann wahlweise ein getrennter Trennsteg 1040 mit entsprechendem Zapfen eingesetzt werden. Die Trennstege 1040 sind so positionierbar, um den Innenraum nach Wunsch aufzuteilen und die Leitungen voneinander getrennt zu führen, wie beispielhaft aus FIG.10B-10C ersichtlich. Der Fuß des Trennstegs 1040 mit dem Zapfen kann zudem die beiden Stirnenden 1037 angrenzender Schalenteile 1031 übergreifen (hier nicht gezeigt) zur axialen Sicherung. Am anderen Ende können die Trennstege 1040 einen Fortsatz aufweisen, der passend und verliersicher in ein Wellental des Wellprofils eingreift, wie FIG.10C zeigt.

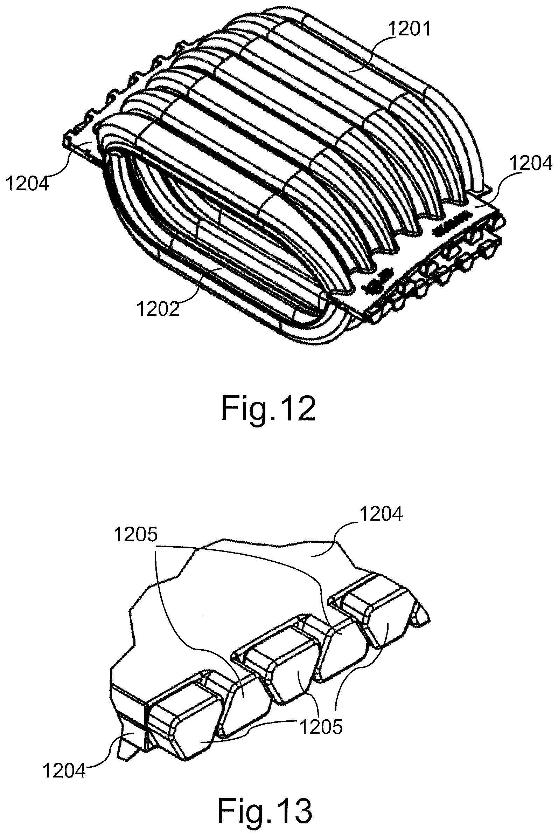

Die Schalenteile 1031, 1032 haben ferner an jedem der parallelen Befestigungsbänder 1054 zur Längsverstrebung bzw. Längsverstärkung, zwecks Sicherung am benachbarten Schalenteil (FIG.10B) jeweils endseitig an beiden Stirnenden 1037 jeweils zusammenwirkende Verbinder 1051, 1052 zur besseren Kraftübertragung. Die Verbinder 1051, 1052 können z.B. wie eine Schwalbenschwanz-Verbindung ausgeführt sein. Der Befestigungsmechanismus des Befestigungsbands 1054 für das gegenüberliegende Schalenteil 1031 bzw. 1032 weist in FIG.10A-10C Krampen für eine Verbindung ähnlich einem Reiß- bzw. Zippverschluss auf, die weiter unten zu FIG.12-16 näher erläutert sind. Ferner ist die axiale Gesamtlänge eines Schalenteils 1031, 1032 nach FIG.10A-10C insgesamt kürzer als in FIG.3A-3D, z.B. mit einer Erstreckung über weniger als zehn Wellenperioden des Wellprofils. Das Wellprofil beider Schalenteile 1031 bzw. 1032 kann jedoch wie in FIG.3A-3D ausgeführt sein.

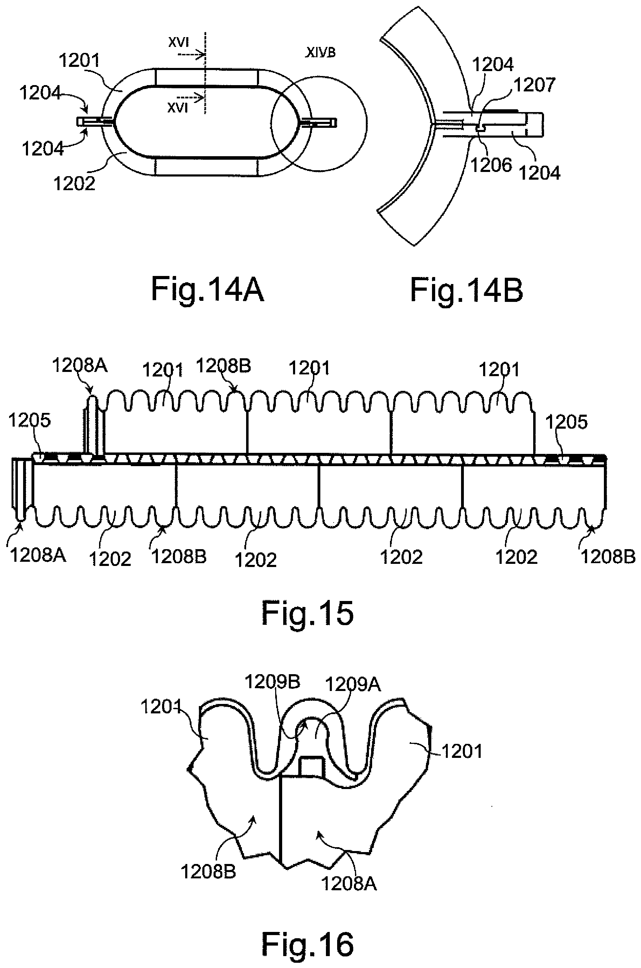

FIG.11 zeigt rein beispielhaft eine von vielen möglichen Gestaltungen einer Leitungsführungseinrichtung 1100 mit einer aus mehreren Längsabschnitten 1100A, 1100B, 1100C in Längsrichtung zusammengesetzten Umhüllung. Die Fügestellen der Längsabschnitte 1100A, 1100B, 1100C sind in FIG.11 nur schematisch gezeigt (gestrichelte Kästen). Im ersten Längsabschnitt 1100A sind die Schalenteile 1131, 1132, z.B. in der Ausführungsform nach FIG.3A-3D oder FIG.12-16, so angeordnet, dass eine gewünschte Krümmung gemäß einem ersten Drehsinn um eine Umlenkachse (nicht gezeigt) ermöglicht wird und die entgegengesetzte Durchbiegung in diesem Abschnitt 1100A weitgehend unterdrückt ist. Im zweiten Längsabschnitt 1100B sind die Schalenteile 1131, 1132 umgekehrt bzw. zur neutralen Faser gespiegelt angeordnet, d.h. dass das asymmetrische Biegeverhalten umgekehrt zum Längsabschnitt 1100A realisiert ist. Im dritten Längsabschnitt 1100C ist ein Wellschlauch 1141 mit symmetrischem Biegeverhalten, d.h. mit an den Breitseiten identischem Wellenprofil, vorgesehen. Im Beispiel nach FIG.11 ist die Leitungsführungseinrichtung 1100 im Wesentlichen in der Ebene der Figur biegsam und senkrecht dazu, d.h. seitlich stabil, da die Umhüllung einen länglichrunden Querschnitt aufweist (vgl. FIG.3D oder FIG.14B). Es ist jedoch möglich, z.B. anhand geeigneter Übergangsmuffen zwischen um 90° gedrehten Schalenteilen 1131, 1132, oder durch eine winkelverdrehte Anordnung von Stützgerippen, z.B. nach FIG.4A-4C oder FIG.9A-9C, an Wellschlauch mit kreisrundem Querschnitt, einen gewünschten dreidimensionalen Verlauf zu erzielen. So kann auch ein Verlauf mit winkelversetzten Krümmungsachsen zwischen einzelnen Längsabschnitten vordefiniert werden.

Nachfolgend werden weitere, nicht beanspruchte unabhängige Aspekte anhand der FIG.12-16, mit Bezugnahme auf FIG.1, erläutert:
In FIG.1 ist eine schematisch gezeigte Leitungsführungseinrichtung allgemein mit 100 bezeichnet. Eine solche Leitungsführungseinrichtung 100 dient zur geschützten Führung von Kabeln, Schläuchen oder ähnlichen Leitungen, welche in den Abbildungen nicht näher gezeigt sind. Zwischen einem Obertrum und einem Untertrum bildet die Leitungsführungseinrichtung 100 in bekannter Weise einen etwa U-förmigen Umlenkbogen mit vorgegebener Krümmung. Der Umlenkbogen hat zur Vermeidung von Leitungsbrüchen insbesondere einen vorgegebenen, minimalen Krümmungsradius und gewährleistet damit, dass die zulässigen Krümmungsradien der geführten Leitungen nicht unterschritten werden.

Zum Aufbau der Leitungsführungseinrichtung 100 generell bzw. der für den Krümmungsradius besonderen Profilierung der Wellenberge und -Täler im Hauptteil der wellschlauchartigen Schalenteile 1201, 1202 verweisen wir auf die hier ausdrücklich einbezogene Lehre zu FIG.1 bzw. FIG.2-3 oben, insbesondere die obige Lehre zum Wellprofil gemäß FIG.2C.

Die Leitungsführungseinrichtung 100 bildet eine staubdichte wellschlauchartige Umhüllung und ist abschnittsweise aus jeweils zwei gegenüberliegenden, wellschlauchartigen Schalenteilen 1201; 1202, mit unterschiedlichen Profilen, siehe FIG.2C, zusammengesetzt. Das Schalenteil 1201 außen kann eine konkave Vorspannung aufweisen.

Jedes Schalenteil 1201; 1202 hat an den beiden Längsseiten ein in Längsrichtung durchgehendes Befestigungsband 1204. Das Befestigungsband 1204 hat jeweils eine Verzahnung mit regelmäßig angeordneten Krampen 1205 bzw. Zähnen, die mit einer entsprechenden Verzahnung mit Krampen 1205 bzw. Zähnen am Befestigungsband 1204 des gegenüberliegenden Schalenteils 1201; 1202 in der Art eines Reißverschlusses zusammenwirken.

Die Krampen 1205 sind an beiden Befestigungsbändern 1204 eines Schalenteils 1201, 1202 identisch geformt und angeordnet. Sie sind mit regelmäßigen Abständen bzw. Freiräumen angeordnet, sodass sie ineinandergreifen bzw. verschränken können wie bei einem Reißverschluss. Die Krampen 1205 haben einen in FIG.13 näher ersichtlichen Wirkungsquerschnitt der zumindest annähernd der Form eines gleichschenkligen Trapezes entspricht, wobei die schmale Seite jeweils von dem zu verbindenden Schalenteil 1201, 1202 abgewandt ist, d.h. dass die zulaufenden Schenkel bei verbundenen Schalenteilen 1201, 1202 miteinander verkeilen, wie FIG.13 zeigt.

Ein Lösen durch Querkräfte und Torsion in Bezug auf die Längsrichtung der Leitungsführungseinrichtung 100 wird so effektiv verhindert. Zudem können die Befestigungsbänder 1204 durch Translation bzw. Kraft in etwa senkrecht zur Längsrichtung der Schalenteile 1201, 1202 aneinander befestigt werden, d.h. ohne erhebliche Krümmung der Teile.

Die Krampen 15 sind integral mit den Befestigungsbändern 1204 bzw. dem Kunststoff der Schalenteile 1201, 1202 hergestellt. Sie stehen quer oder genau senkrecht zur Längsrichtung der Leitungsführungseinrichtung 100 seitlich nach außen vor, quasi in Verlängerungen der Befestigungsbänder 1204.

FIG.14A-14b zeigen im Bereich, zwischen der Verzahnung mit den Krampen 1205 und dem Übergang zur wellschlauchartigen Hülle der Schalenteile 1201, 1202, eine Längsnut 1206 im Befestigungsband 1204 an einer Seite. Die Längsnut 1206 wirkt mit einer entsprechenden Feder 1207 am zu verbindenden Schalenteil formschlüssig zusammen. Jedes Schalenteil 1201, 1202 kann an einer Seite im Befestigungsband 1204 eine Längsnut 1206 und an der anderen Längsseite im Befestigungsband 1204 eine Feder 1207 aufweisen. Die Längsnut 1206 und Feder 1207 sind so symmetrisch zur Mittenebene angeordnet, dass identische Schalenteile 1201 bzw. 1202 auch anhand der Nut-Feder-Verbindung miteinander verbindbar sind. Die Verbindung von Längsnut 1206 und entsprechender Feder 1207 hat vor allem eine die Dichtheit gegen Partikelaustritt verstärkende Wirkung, insbesondere in Bezug auf die Krümmung im Umlenkbogen.

FIG.16 veranschaulicht schließlich als weiteren Aspekt eine mögliche Dichtung der stirnseitigen Endbereiche 1208A, 1208B an den Schalenteilen 1201, 1202. Ein senkrecht zur Längsachse gerichteter und umfänglich durchgehender Dichtvorsprung 1209A, mit einem zunächst zulaufenden und endseitig verdickten Querschnitt, z.B. ähnlich einem Pilzkopf oder einem Spielstein, greift in eine innenliegende, entsprechend verlaufende Dichtnut 1209B am anderen stirnseitigen Endbereich 1208B. Der Dichtvorsprung 1209A greift in die Dichtnut 1209B form- und/oder kraftschlüssig ein.

Die in FIG.13 am besten erkennbare Fügestelle zwischen den Befestigungsbändern 1204 bildet auch hier die neutrale Faser.

**Bezugszeichenliste**

| | | | |
|---|---|---|---|
| FIG.1 | | 316 | Wellentäler (außen) |
| 100 | Leitungsführungseinrichtung | 318 | Wellentäler (innen) |
| 101 | Obertrum | 320 | Wellentäler (innen) |
| 103 | Untertrum | 322 | Längsverstrebungen |
| 104 | Umlenkbogen | 331,332 | Schalenteile |
| 105 | feststehende Anschlussstelle | 333 | Druckknöpfe |
| 107 | relativbewegliche Anschluss- | 334 | Aufnahmen |
| stelle | | 335 | Schnittstelle |
| 110 | Umhüllung | 340 | Trennstege |
| A | Umlenkachse | B1 | lichte axiale Breite (innen) |
| | | B2 | lichte axiale Breite (außen) |
| FIG.2A-2C | | FIG. 4A-4C: | |
| 200 | Leitungsführungseinrichtung | 400 | Leitungsführungseinrichtung |
| 208 | Innenraum | 408 | Innenraum |
| 210 | Umhüllung | 410 | Wellschlauch |
| 211 | Innenseite | 420 | Wellentäler |
| 212 | Außenseite | 440 | Stützgerippe |
| 214 | Wellenberge (außen) | 442 | Träger |
| 215 | Anschläge | 444 | Querrippen |
| 216 | Wellentäler (außen) | 446 | Fortsätze |
| 217 | gegenüberliegendes Ende | | |
| 218 | Wellentäler (innen) | FIG. 5: | |
| 219 | Verrastungsring | 500 | Leitungsführungseinrichtung |
| 220 | Wellenberge (innen) | 510 | Wellschlauch |
| 222 | Längsverstrebungen | 540 | Stützgerippe |
| B1 | lichte axiale Breite (innen) | 542 | Träger |
| B2 | lichte axiale Breite (außen) | FIG. 6A-6C: | |
| FIG.3A-3D | | 600 | Leitungsführungseinrichtung |
| 300 | Leitungsführungseinrichtung | 608 | Innenraum |
| 308 | Innenraum | 610 | Umhüllung |
| 310 | Umhüllung | 611 | Innenseite |
| 311 | Innenseite | 612 | Außenseite |
| 312 | Außenseite | 618 | Wellentäler |
| 314 | Wellenberge (außen) | 620 | Wellenberge |
| 315 | Anschläge | 640 | Stützgerippe |
| 642 | Träger | 943A,943B | Clipverbinder |
| 644,645 | Querrippen | 944 | Querrippe |
| | | 947 | Haltearm |
| FIG. 7A-7C: | | 948A, | 948B Vorsprung |
| 700 | Leitungsführungseinrichtung | 949 | Aussparung |
| 710 | Umhüllung | | |
| 711 | Innenseite | | |
| 712 | Außenseite | FIG.10A-10C: | |
| 731,732 | Schalenteile | 1031, 1032 | Schalenteil |
| 760 | Leitungsführung | 1037 | Stirnende |
| 762 | Teilstück bzw. Glied | 1040 | Trennsteg |
| 764 | Seitenteil | 1051, 1052 | Verbinder |
| 766 | Trägerband | 1053 | Lochleiste |
| 768 | Befestigungsvorsprünge | 1054 | Befestigungsband |
| 769 | Befestigungsmittel | | |
| 770 | Verbindungssteg | FIG.11 | |
| 771,772 | T-förmige Stege | 1100 | Leitungsführungseinrichtung |
| 775,776 | Längsstege | 1100A | erster Längsabschnitt |
| 778 | Verbinder | 1100B | zweiter Längsabschnitt |
| | | 1100C | dritter Längsabschnitt |
| | | 1110 | Umhüllung |
| FIG. 8A-8B: | | 1131 | Schalenteil |
| 800 | Leitungsführungseinrichtung | 1132 | Schalenteil |
| 810 | Umhüllung | 1141 | Wellschlauch |
| 880 | Anschlussflansch | | |
| 881,882 | Klemmschalen | FIG.12 | |
| 883 | Schnapphaken | 1201 | Schalenteil |
| 884 | Aussparungen | 1202 | Schalenteil |
| 887 | Durchgangsöffnungen | 1204 | Befestigungsband |
| 888 | Verbindungsschrauben | 1205 | Krampen |
| 885,886 | Endbereiche | 1206 | Längsnut |
| 890 | Durchführdichtung | 1207 F | Feder |
| FIG. 9A-9C: | | 1208A,1208B | stirnseitiger Endbe-reich |
| 940 | Stützgerippe | 1209A | Dichtvorsprung |
| 941 | Modul | 1209B | Dichtnut |
| 942 | Trägerstrang | | |

## Patentansprüche

1. Leitungsführungseinrichtung (100; 400; 500) für Leitungen, wie z.B. Kabel, Schläuche oder dergleichen, wobei die Leitungsführungseinrichtung ein erstes Ende zum Befestigen an einer feststehenden Anschlussstelle (105) und zweites Ende zum Befestigen an einer relativbeweglichen Anschlussstelle (107) aufweist und zwischen den Enden ein Obertrum (101), einen verfahrbaren Umlenkbogen (104) und ein Untertrum (103) bildet, wobei der Umlenkbogen um eine Umlenkachse (A), vorzugsweise mit vorgegebenem Krümmungsradius, gekrümmt ist; und wobei die Leitungsführungseinrichtung eine biegsame schlauchartige Umhüllung (210... 610) aufweist, die einen Innenraum umgibt,
**dadurch gekennzeichnet, dass**
die Umhüllung (110; 410; 510) ein von außen angebrachtes, separates Stützgerippe (440; 540; 940) mit einer Vielzahl von in Umfangsrichtung verlaufenden Querrippen (444; 944) umfasst,
so dass die Leitungsführungseinrichtung (100; 400; 500) zumindest in einem Längsabschnitt asymmetrisches Biegeverhalten in Bezug auf Krümmung um die Umlenkachse (A) und auf entgegengesetzte Krümmung aufweist derart, dass die zugelassene Durchbiegung im Vergleich zur gewünschten Krümmung erheblich geringer ist, wobei das Stützgerippe (440; 540; 940) zwei gegenüberliegende und in Längsrichtung verlaufende Träger (442; 542; 942) aufweist, welche die Vielzahl von Querrippen (444; 944) tragen.

2. Leitungsführungseinrichtung nach Anspruch 1, **dadurch gekennzeichnet, dass** die schlauchartige Umhüllung (110; 410; 510) in der Art eines Wellschlauchs ausgeführt ist und ein Wellprofil aufweist, welches der Biegsamkeit dient, wobei das Wellprofil der Umhüllung vorzugsweise (110; 410; 510) parallel ringförmig gewellt ist.

3. Leitungsführungseinrichtung nach Anspruch 1 oder 2, **dadurch gekennzeichnet, dass** die Querrippen (944) in Längsrichtung vorstehende Vorsprünge (948A, 948B) umfassen derart, dass die Querrippen (944) in einer gestreckten bzw. freitragenden Lage miteinander im Anschlag stehen, wobei vorzugsweise jeweils beidseitig an den Querrippen (944) konjugiert geformte Vorsprünge (948A, 948B) zusammenwirken, insbesondere zentrierend zusammenwirken.

4. Leitungsführungseinrichtung nach Anspruch 2, **dadurch gekennzeichnet, dass** die Querrippen (444; 544) an der Außenseite in das Wellprofil der Umhüllung (110; 410; 510) zumindest teilweise eingreifen, wobei das Stützgerippe (440; 540) insbesondere so ausgeführt ist, dass in mindestens jede dritte Welle des Wellprofils, vorzugsweise in jede Welle des Wellprofils, eine Querrippe (444; 544) eingreift.

5. Leitungsführungseinrichtung nach einem der Ansprüche 1 bis 4, **dadurch gekennzeichnet, dass** das Stützgerippe (440; 540; 940) einstückig hergestellt ist, und/oder wobei die Träger (442; 542; 942) auf Höhe der neutralen Faser der Leitungsführungseinrichtung liegen.

6. Leitungsführungseinrichtung nach einem der Ansprüche 1 bis 5, **dadurch gekennzeichnet, dass** der Umlenkbogen (104) in der Ebene senkrecht zur Umlenkachse (A) verfahrbar ist, insbesondere wobei die Seitenstabilität gegen Biegung aus der Krümmungsebene durch das Stützgerippe (440; 540; 940) erzielt wird.

7. Leitungsführungseinrichtung nach einem der Ansprüche 1 bis 6, **dadurch gekennzeichnet, dass** die Träger (442; 542; 942) an beiden Enden mit den Anschlussstellen (105, 107) befestigbar sind und Zug- und Druckkräfte beim Verfahren des Umlenkbogens (104) abfangen; und/oder
dass das Stützgerippe (440; 540; 940) eine Längserstreckung aufweist, welche mindestens der Maximallänge des Obertrums (101) entspricht.

8. Leitungsführungseinrichtung nach einem der Ansprüche 1 bis 7, **dadurch gekennzeichnet,**
**dass** die Träger (442; 542; 942) seitliche Befestigungsmittel zur Verbindung mit dem Stützgerippe einer weiteren Umhüllung aufweisen; und/oder
**dass** die Träger (442; 542; 942) endseitige Befestigungsmittel aufweisen zur Befestigung, insbesondere Verkettung, in Längsrichtung aufeinanderfolgender Stützgerippe (440; 940), vorzugsweise wobei die endseitigen Befestigungsmittel konjugierte Clipverbinder (943A, 943B) umfassen.

9. Leitungsführungseinrichtung nach einem der Ansprüche 1 bis 8, **dadurch gekennzeichnet, dass** die Querrippen (444; 944) flexibel um die Längsrichtung sind und kreisbogenförmig im Querschnitt senkrecht zur Längsrichtung verlaufen.

10. Leitungsführungseinrichtung nach einem der Ansprüche 1 bis 3 oder 5 bis 9, **dadurch gekennzeichnet, dass** das Stützgerippe (940) beidseitig in Umfangsrichtung vorstehende, biegsame Haltearme (947) aufweist zum klammerartigen Halten des Stützgerippes (940) außenseitig an einem Wellschlauch (410), vorzugsweise wobei Zwischenabstand und Breite der Haltearme (947) in Längsrichtung anwendungsgemäß einstellbar ist, zur Begrenzung des minimalen Krümmungsradius im Umlenkbogen (104).

11. Leitungsführungseinrichtung nach Anspruch 2, **dadurch gekennzeichnet, dass** das Stützgerippe (440) beidseitig keil- oder V-förmige Fortsätze (446) aufweist, welche über ein geringes Umfangsmaß in das Wellprofil der Innenseite des Umlenkbogens (104) eingreifen und den minimalen Krümmungsradius des Umlenkbogens vorgeben.

12. Leitungsführungseinrichtung nach einem der Ansprüche 1 bis 11, **dadurch gekennzeichnet, dass**
die Umhüllung (110; 410; 510) den Innenraum staubdicht umgibt, und/oder
die Umhüllung (110; 410; 510) selbst die Leitungen führt und trägt, und/oder
die Umhüllung (110; 410; 510) und gegebenenfalls das Stützgerippe (440; 540; 940) aus Kunststoff hergestellt sind, insbesondere aus einem elastischen und dauerbiegefesten Kunststoff, vorzugsweise einem Thermoplast.

13. Leitungsführungseinrichtung nach Anspruch 2, **dadurch gekennzeichnet, dass** die wellschlauchartige Umhüllung (110; 410; 510) im Vergleich zur gewünschten konkaven Krümmung um die Umlenkachse (A) nur eine sehr geringe oder im Wesentlichen keine konvexe Durchbiegung gestattet, wobei die statische konvexe Durchbiegung vorzugsweise auf einen Radius begrenzt ist, welcher um ein Vielfaches, insbesondere um mindestens das 10-fache größer ist, als der statische Biegeradius der wellschlauchartigen Umhüllung bei konkaver Krümmung.

14. Leitungsführungseinrichtung nach einem der Ansprüche 1 bis 13, **dadurch gekennzeichnet, dass** die Umhüllung (110) in einem ersten Längsabschnitt asymmetrisches Biegeverhalten und in einem zweiten Längsabschnitt ein entgegengesetzt asymmetrisches Biegeverhalten aufweist; und/oder
die Umhüllung (110) in einem Längsabschnitt asymmetrisches Biegeverhalten und in einem anderen Längsabschnitt ein symmetrisches Biegeverhalten aufweist.

15. Modul für ein Stützgerippe (440; 540; 940) zum Herstellen einer Leitungsführungseinrichtung anhand eines Wellschlauchs mit Wellprofil, wobei das Modul (941)
- einstückig aus einem Kunststoff hergestellt ist, eine Längserstreckung aufweist und von außen an einem Wellschlauch angebracht werden kann; und
- eine Vielzahl in eine Umfangsrichtung quer zur Längserstreckung verlaufende Querrippen (444; 544; 944) aufweist;
- wobei das Modul zwei gegenüberliegende und in Längsrichtung verlaufende Träger (442; 542; 942) aufweist, welche die Querrippen (444; 944) tragen, und wobei
- die Querrippen (444; 544) zumindest teilweise in das Wellprofil des Wellschlauchs eingreifen können; oder
- die Querrippen (944) in Längsrichtung vorstehende Vorsprünge (948A, 948B) umfassen derart, dass die Querrippen (944) in einer gestreckten bzw. freitragenden Lage miteinander im Anschlag stehen.

## Claims

1. A line guide device (100; 400; 500) for lines like for example cables, hoses or the like, wherein the line guide device has a first end for fixing to a stationary connecting location (105) and a second end for fixing to a relatively moveable connecting location (107) and between the ends forms an upper run (101), a displaceable direction-changing curve (104) and a lower run (103), wherein the direction-changing curve is curved about a direction-changing axis (A), preferably with a predetermined curvature radius, and wherein the line guide device has a flexible tube-like sheath (210... 610) which surrounds an internal space,
**characterised in that**
the sheath (110; 410; 510) includes a separate supporting skeleton (440; 540; 940) which is fitted from the outside and which has a plurality of transverse ribs (444; 944) extending in the peripheral direction, so that the line guide device (100; 400; 500) at least in a longitudinal section has an asymmetric bending behaviour in relation to curvature about the direction-changing axis (A) and to opposite curvature in such a way that the permitted bending sag is considerably less in comparison with the desired curvature, wherein the supporting skeleton (440; 540; 940) has two mutually opposite carriers (442; 542; 942) which extend in the longitudinal direction and which carry the plurality of transverse ribs (444; 944).

2. A line guide device as set forth in claim 1 **characterised in that** the tube-like sheath (110; 410; 510) is configured in the manner of a corrugated tube and has a corrugated profile which serves for flexibility, preferably wherein the corrugated profile of the sheath (110; 410; 510) is corrugated in parallel ring-shape form.

3. A line guide device as set forth in claim 1 or claim 2 **characterised in that** the transverse ribs (944) include projections (948A, 948B) projecting in the longitudinal direction such that the transverse ribs (944) are in abutting contact with each other in a straight or self-supporting position, wherein preferably projections (948A, 948B) which are shaped in conjugate relationship respectively at both sides on the transverse ribs (944) cooperate, in particular cooperate in centring relationship.

4. A line guide device as set forth in claim 2 **characterised in that** the transverse ribs (444; 544) at least partially engage at the outside into the corrugated profile of the sheath (110; 410; 510), in particular wherein the supporting skeleton (440; 540) is so adapted that a transverse rib (444... 644) engages into at least every third corrugation of the corrugated profile, preferably into every corrugation of the corrugated profile.

5. A line guide device as set forth in one of claims 1 to 4 **characterised in that** the supporting skeleton (440; 540; 940) is produced in one piece, and/or wherein the carriers (442; 542;942) are disposed at the level of the neutral fibre of the line guide device.

6. A line guide device as set forth in one of claims 1 to 5 **characterised in that** the direction-changing curve (104) is displaceable in the plane perpendicular to the direction-changing axis (A), in particular wherein the lateral stability in relation to bending out of the curvature plane is achieved by the supporting skeleton (440; 540; 940).

7. A line guide device as set forth in one of claims 1 to 6 **characterised in that** the carriers (442; 542; 942) are fixable at both ends to the connecting locations (105, 107) and carry tensile and compressive forces upon displacement of the direction-changing curve; and/or
**in that** the supporting skeleton (440; 540; 940) has a longitudinal extent corresponding at least to the maximum length of the upper run (101).

8. A line guide device as set forth in one of claims 1 to 7 **characterised in that** the carriers (442; 542; 942) have lateral fixing means for connection to the supporting skeleton of a further sheath; and/or
**in that** the carriers (442; 542; 942) have end fixing means for fixing, in particular for catenation, longitudinally successive supporting skeletons (440... 940), preferably wherein the end fixing means include conjugated clip connectors (943A, 943B).

9. A line guide device as set forth in one of claims 1 to 8 **characterised in that** the transverse ribs (444; 944) are flexible about the longitudinal direction and extend in cross-section perpendicular to the longitudinal direction in the shape of a circular arc.

10. A line guide device as set forth in one of claims 1 to 3 or 5 to 9 **characterised in that** the supporting skeleton (940) has flexible holding arms (947) projecting in the peripheral direction at both sides for holding the supporting skeleton (940) in clip-like relationship at the outside on a corrugated tube (410), preferably wherein the intermediate spacing and the width of the holding arms (947) is adjustable in the longitudinal direction to limit the minimum curvature radius in the direction-changing curve (104) according to application.

11. A line guide device as set forth in claim 2, in particular as set forth in claim 9, **characterised in that** the supporting skeleton (440) has at both sides wedge-shaped or V-shaped extensions (446) which engage over a small peripheral extent into the corrugated profile at the inside of the direction-changing curve (104) and which predetermine the minimum curvature radius of the direction-changing curve.

12. A line guide device as set forth in one of claims 1 to 11 **characterised in**
**that** the sheath (110; 410; 510) dust-tightly surrounds an internal space, and/or
the sheath (110; 410; 510) itself guides and carries the lines;
and/or
the sheath (110; 410; 510) and, where applicable, the supporting skeleton (440; 540; 940), are made from plastic, in particular an elastic plastic having long-term bending strength, preferably a thermoplastic.

13. A line guide device as set forth in claim 2 **characterised in that** in comparison with the desired concave curvature about the direction-changing axis (A) the corrugated tube-like sheath (110; 410; 510) permits only a very slight or substantially no convex bending sag, wherein the static convex bending sag is preferably limited to a radius which is a multiple, in particular at least 10 times, greater than the static bending radius of the corrugated tube-like sheath upon concave curvature.

14. A line guide device as set forth in one of claims 1 to 13 **characterised in that** the sheath (110) has an asymmetric bending characteristic in a first longitudinal portion and an oppositely asymmetric bending characteristic in a second longitudinal portion, and/or
the sheath (100) has an asymmetric bending characteristic in a longitudinal portion and a symmetrical bending characteristic in another longitudinal portion.

15. A module for a supporting skeleton (440; 540; 940) for the production of a line guide device by means of a corrugated tube with a corrugated profile, wherein the module (941)
- is made in one piece from plastic, has a longitudinal extent and can be fitted from the outside to a corrugated tube, and
- has a plurality of transverse ribs (444; 544; 944) extending in a peripheral direction transversely relative to the longitudinal extent,
- wherein the module has two mutually opposite carriers (442; 542; 942) which extend in the longitudinal direction and which carry the transverse ribs (444; 944), and wherein
- the transverse ribs (444; 544) can at least partially engage into the corrugated profile of the corrugated tube, or
- the transverse ribs (944) include projections (948A, 948B) projecting in the longitudinal direction such that the transverse ribs (944) are in abutting contact with each other in a straight or self-supporting position.

## Revendications

1. Dispositif de passage de câbles (100; 460; 500) pour des conduites, telles que des câbles, des tuyaux ou similaires, le dispositif de passage de conduites présentant une première extrémité destinée à être fixée à un point de raccordement fixe (105) et une deuxième extrémité destinée à être fixée à un point de raccordement mobile (107) et formant, entre les extrémités, un brin supérieur (101), un coude de renvoi mobile (104) et un brin inférieur (103), le coude de renvoi étant courbé autour d'un axe de renvoi (A), de préférence avec un rayon de courbure prédéfini; et le dispositif de passage de conduites comportant une enveloppe flexible de type tuyau (210...610) qui entoure un espace intérieur,
**caractérisé en ce que**
l'enveloppe (110; 410; 510) comprend une ossature de support (440; 540; 940) fixée à l'extérieur et comportant une pluralité de nervures transversales (444; 944) s'étendant dans la direction circonférentielle, de sorte que le dispositif de passage de conduite (100; 400; 500) présente, au moins dans une partie longitudinale, un comportement de flexion asymétrique par rapport à la courbure autour de l'axe de renvoi (A) et à la courbure opposée, de telle sorte que la flexion admissible est nettement inférieure à la courbure souhaitée, l'ossature de support (440; 540; 940) comportant deux supports (442; 542; 942) opposés et s'étendant dans le sens longitudinal, qui portent la pluralité de nervures transversales (444; 944).

2. Dispositif de passage de câbles selon la revendication 1, **caractérisé en ce que** l'enveloppe tubulaire (110; 410; 510) est réalisée à la manière d'un tuyau ondulé et présente un profil ondulé qui sert à la flexibilité, le profil ondulé de l'enveloppe (110; 410; 510) étant de préférence ondulé en anneau parallèle.

3. Dispositif de passage de câbles selon la revendication 1 ou 2, **caractérisé en ce que** les nervures transversales (944) comprennent des saillies saillantes dans le sens longitudinal (948A, 948B) de telle sorte que les nervures transversales (944) viennent en butée les unes contre les autres dans une position allongée ou en porte-à-faux, des saillies (948A, 948B) de forme conjuguée coopérant de préférence sur les deux côtés des nervures transversales (944), en particulier en coopération de centrage.

4. Dispositif de passage de câbles selon la revendication 2, **caractérisé en ce que** les nervures transversales (444; 544) s'engagent au moins partiellement à l'extérieur dans le profil ondulé de l'enveloppe (110; 410; 510), l'ossature de support (440; 540) étant notamment réalisée de telle sorte qu'une nervure transversale (444; 544) s'engage dans au moins une ondulation sur trois du profil ondulé, de préférence dans chaque ondulation du profil ondulé.

5. Dispositif de passage de câbles selon l'une quelconque des revendications 1 à 4, **caractérisé en ce que** l'ossature de support (440; 540; 940) est fabriquée d'un seul tenant et/ou **en ce que** les supports (442; 542; 942) se trouvent au niveau de la fibre neutre du dispositif de passage de câbles.

6. Dispositif de passage de câbles selon l'une quelconque des revendications 1 à 5, **caractérisé en ce que** le coude de renvoi (104) est mobile dans le plan perpendiculaire à l'axe de déviation (A), en particulier la stabilité latérale contre la flexion hors du plan de courbure étant obtenue par l'ossature de support (440; 540; 940).

7. Dispositif de passage de conduites selon l'une quelconque des revendications 1 à 6, **caractérisé en ce que** les supports (442; 542; 942) peuvent être fixés aux deux extrémités aux points de raccordement (105, 107) et absorbent les forces de traction et de pression lors du déplacement du coude de renvoi (104); et/ou
**que** l'ossature de support (440; 540; 940) présente une extension longitudinale qui correspond au moins à la longueur maximale du brin supérieur (101).

8. Dispositif de passage de câbles selon l'une quelconque des revendications 1 à 7, **caractérisé en ce que** les supports (442; 542; 942) comportent des moyens de fixation latéraux pour la liaison avec l'ossature de support d'une enveloppe supplémentaire; et/ou
**en ce que** les supports (442; 542; 942) comportent des moyens de fixation d'extrémité pour la fixation, en particulier l'enchaînement, dans la direction longitudinale d'ossatures de support (440; 940) successives, les moyens de fixation d'extrémité comprenant de préférence des connecteurs à clip conjugués (943A, 943B).

9. Dispositif de passage de câbles selon l'une quelconque des revendications 1 à 8, **caractérisé en ce que** les nervures transversales (444; 944) sont flexibles autour le sens longitudinal et s'étendent en arc de cercle dans la section transversale perpendiculaire par rapport au sens longitudinal.

10. Dispositif de passage de câbles selon l'une quelconque des revendications 1 à 3 ou 5 à 9, **caractérisé en ce que** l'ossature de support (940) comporte des bras de retenue flexibles (947) qui font saillie des deux côtés dans la direction périphérique pour maintenir l'ossature de support à la manière d'une pince (940) à l'extérieur sur un tuyau ondulé (410), de préférence l'espacement et la largeur des bras de retenue (947) étant réglables dans le sens longitudinal en fonction de l'application, afin de limiter le rayon de courbure minimal dans le coude de renvoi (104).

11. Dispositif de passage de conduites selon la revendication 2, **caractérisé en ce que** l'ossature de support (440) présente des prolongements (446) en forme de coin ou en V des deux côtés, qui s'engagent sur une petite circonférence dans le profil ondulé de la face intérieure du coude de renvoi (104) et prédéfinissent le rayon de courbure minimal du coude de renvoi.

12. Dispositif de passage de conduites selon l'une quelconque des revendications 1 à 11, **caractérisé en ce que**
l'enveloppe (110; 410; 510) entoure l'espace intérieur de manière étanche à la poussière, et/ou
l'enveloppe (110; 410; 510) guide et supporte elle-même les conduites, et/ou
l'enveloppe (110; 410; 510) et, le cas échéant, l'ossature de support (440; 540; 940) sont fabriqués en matière plastique, en particulier en une matière plastique élastique et résistante à la flexion permanente, de préférence en une matière thermoplastique.

13. Dispositif de passage de câbles selon la revendication 2, **caractérisé en ce que** l'enveloppe ondulée (110; 410; 510) ne permet qu'une très faible ou pratiquement aucune flexion convexe par rapport à la courbure concave souhaitée autour de l'axe de renvoi (A), la flexion convexe statique étant de préférence limitée à un rayon qui est plusieurs fois, en particulier au moins 10 fois, supérieur au rayon de flexion statique de l'enveloppe tubulaire ondulée dans le cas d'une courbure concave.

14. Dispositif de passage de câbles selon l'une quelconque des revendications 1 à 13, **caractérisé en ce que** l'enveloppe (110) présente un comportement de flexion asymétrique dans une première section longitudinale et un comportement de flexion asymétrique opposé dans une deuxième section longitudinale ; et/ou
l'enveloppe (110) présente un comportement de flexion asymétrique dans une section longitudinale et un comportement de flexion symétrique dans une autre section longitudinale.

15. Module pour une ossature de support (440; 540; 940) destiné à la fabrication d'un dispositif de passage de conduites à l'aide d'un tuyau ondulé avec profil ondulé, dans lequel le module (941)
- est fabriqué d'une seule pièce en matière plastique, présente une extension longitudinale et peut être fixé de l'extérieur sur un tuyau ondulé; et
- présente une pluralité de nervures transversales (444; 544; 944) s'étendant dans une direction circonférentielle transversalement à l'extension longitudinale;
- le module comporte deux supports (442; 542; 942) opposés et s'étendant dans la direction longitudinale, qui portent les nervures transversales (444; 944), et
- les nervures transversales (444; 544) peuvent s'engager au moins partiellement dans le profil ondulé du tuyau flexible; ou
- les nervures transversales (944) comprennent des saillies (948A, 948B) s'étendant dans le sens longitudinal, de telle sorte que les nervures transversales (944) viennent en butée les unes contre les autres dans une position allongée ou en porte-à-faux.
